(19) Europäisches Patentamt / European Patent Office / Office européen des brevets

(11) **EP 4 425 212 A1**

(12) **EUROPEAN PATENT APPLICATION**
published in accordance with Art. 153(4) EPC

(43) Date of publication:
**04.09.2024 Bulletin 2024/36**

(21) Application number: **21961650.5**

(22) Date of filing: **25.10.2021**

(51) International Patent Classification (IPC):
**G01S 13/75** *(2006.01)*     **G01S 13/74** *(2006.01)*

(52) Cooperative Patent Classification (CPC):
**G01S 13/74; G01S 13/75;** Y02D 30/70

(86) International application number:
**PCT/CN2021/126070**

(87) International publication number:
**WO 2023/070260 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HE, Chuanfeng
Dongguan, Guangdong 523860 (CN)**

(74) Representative: **Ipside
7-9 Allée Haussmann
33300 Bordeaux Cedex (FR)**

(54) **WIRELESS COMMUNICATION METHOD AND DEVICE**

(57) Embodiments of the present disclosure provide a method for wireless communication and a device. By measuring a reception power of a signal sent by a terminal device through backscattering, location information of the terminal device can be determined, so that low-power positioning or zero-power positioning can be achieved and implemented with low complexity. The method for wireless communication includes the following. A first network device receives a first signal sent by the terminal device through backscattering and determines the location information of the terminal device according to a reception power of the first signal.

**200**

```
┌─────────────────────────────────────────────┐
│ FIRST NETWORK DEVICE RECEIVES FIRST SIGNAL   │──── S210
│ SENT BY TERMINAL DEVICE THROUGH              │
│ BACKSCATTERING                               │
└─────────────────────────────────────────────┘
                       │
┌─────────────────────────────────────────────┐
│ FIRST NETWORK DEVICE DETERMINES LOCATION     │──── S220
│ INFORMATION OF TERMINAL DEVICE ACCORDING     │
│ TO RECEPTION POWER OF FIRST SIGNAL           │
└─────────────────────────────────────────────┘
```

FIG. 6

**Description**

TECHNICAL FIELD

This disclosure relates to the field of communication, and more particularly to a method for wireless communication and a device.

BACKGROUND

Among cellular passive Internet of Things scenarios, an application scenario involves realizing a positioning function by using a zero-power terminal, such as goods positioning in logistics, animal positioning in a farm in animal husbandry, and low-power positioning for individual users and objects. How to implement positioning by using a zero-power terminal is a problem to be solved.

SUMMARY

Embodiments of the present disclosure provide a method for wireless communication and a device. By measuring a reception power of a signal sent by a terminal device through backscattering, location information of the terminal device can be determined, so that low-power positioning or zero-power positioning can be achieved and implemented with low complexity.

In a first aspect, a method for wireless communication is provided. The method includes the following. A first network device receives a first signal sent by a terminal device through backscattering. The first network device determines location information of the terminal device according to a reception power of the first signal.

In a second aspect, a method for wireless communication is provided. The method includes the following. A control device receives first information sent by a first network device. The first information includes a reception power of a first signal, where the first signal is a signal sent by a terminal device through backscattering and received by the first network device. The control device determines location information of the terminal device according to the reception power of the first signal.

In a third aspect, a method for wireless communication is provided. The method includes the following. A terminal device sends a first signal to a first network device through backscattering. A reception power of the first signal is used by the first network device to determine location information of the terminal device.

In a fourth aspect, a network device is provided to perform the method of the foregoing first aspect. Specifically, the network device includes a function module configured to perform the method of the foregoing first aspect.

In a fifth aspect, a control device is provided to perform the method of the foregoing second aspect. Specifically, the control device includes a function module configured to perform the method of the foregoing second aspect.

In a sixth aspect, a terminal device is provided to perform the method of the foregoing third aspect. Specifically, the terminal device includes a function module configured to perform the method of the foregoing third aspect.

In a seventh aspect, a network device including a processor and a memory is provided, where the memory is configured to store a computer program, and the processor is configured to invoke and execute the computer program stored in the memory to perform the method of the foregoing first aspect.

In an eighth aspect, a control device including a processor and a memory is provided, where the memory is configured to store a computer program, and the processor is configured to invoke and execute the computer program stored in the memory to perform the method of the foregoing second aspect.

In a ninth aspect, a network device including a processor and a memory is provided, where the memory is configured to store a computer program, and the processor is configured to invoke and execute the computer program stored in the memory to perform the method of the foregoing third aspect.

In a tenth aspect, an apparatus is provided to perform the method of any one of the foregoing first aspect to the foregoing third aspect. Specifically, the apparatus includes a processor configured to invoke and execute a computer program to enable a device equipped with the apparatus to perform the method of any one of the foregoing first aspect to the foregoing third aspect.

In an eleventh aspect, a computer-readable storage medium is provided to store a computer program, where the computer program enables a computer to perform the method of any one of the foregoing first aspect to the foregoing third aspect.

In a twelfth aspect, a computer program product including computer program instructions is provided, where the computer program instructions are operable with a computer to perform the method of any one of the foregoing first aspect to the foregoing third aspect.

In a thirteenth aspect, a computer program is provided. The computer program is operable with a computer to perform the method of any one of the foregoing first aspect to the foregoing third aspect.

By means of the technical solutions of the foregoing first aspect and the foregoing third aspect, a first network device determines location information of a terminal device according to a reception power of a first signal sent by the terminal device through backscattering, and the terminal device obtains power for sending the first signal through power harvesting, so that low-power positioning or zero-power positioning can be achieved and implemented with low complexity.

By means of the technical solution of the foregoing second aspect, a control device determines location information of a terminal device according to a reception power of a first signal sent by the terminal device through backscattering, and the terminal device obtains power for sending the first signal through power harvesting, so that low-power positioning or zero-power positioning can be achieved and implemented with low complexity.

BRIEF DESCRIPTION OF THE DRAWINGS

FIG. 1 is a schematic diagram of an architecture of a communication system provided by embodiments of the present disclosure.

FIG. 2 is a schematic diagram of a zero-power communication system according to an example of the present disclosure.

FIG. 3 is a diagram illustrating a principle of power harvesting.

FIG. 4 is a diagram illustrating a principle of backscatter communication.

FIG. 5 is a diagram illustrating a circuit principle of resistive load modulation.

FIG. 6 is a schematic diagram of a method for wireless communication provided according to embodiments of the present disclosure.

FIG. 7 is a schematic diagram of a wireless function provided according to embodiments of the present disclosure.

FIG. 8 is a schematic diagram of transmission loss provided according to embodiments of the present disclosure.

FIG. 9 is a schematic diagram illustrating positioning using three network devices provided according to embodiments of the present disclosure.

FIG. 10 is a schematic diagram illustrating positioning using two network devices provided according to embodiments of the present disclosure.

FIG. 11 is a schematic diagram illustrating another positioning using three network devices provided according to embodiments of the present disclosure.

FIG. 12 is a schematic diagram of another method for wireless communication provided according to embodiments of the present disclosure.

FIG. 13 is a schematic diagram of yet another method for wireless communication provided according to embodiments of the present disclosure.

FIG. 14 is a schematic block diagram of a network device provided according to embodiments of the present disclosure.

FIG. 15 is a schematic block diagram of a control device provided according to embodiments of the present disclosure.

FIG. 16 is a schematic block diagram of a terminal device provided according to embodiments of the present disclosure.

FIG. 17 is a schematic block diagram of a communication device provided according to embodiments of the present disclosure.

FIG. 18 is a schematic block diagram of an apparatus provided according to embodiments of the present disclosure.

FIG. 19 is a schematic block diagram of a communication system provided according to embodiments of the present disclosure.

DETAILED DESCRIPTION

The following will describe technical solutions of embodiments of the disclosure with reference to the accompanying drawings in embodiments of the disclosure. Apparently, embodiments described herein are merely some embodiments, rather than all embodiments, of the disclosure. Based on embodiments of the disclosure, all other embodiments obtained by those of ordinary skill in the art without creative effort shall fall within the protection scope of the disclosure.

The technical solutions of embodiments of the disclosure can be applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th-generation (5G) communication system, a cellular internet of things (IoT), a cellular passive IoT, or other communication systems.

Generally, a conventional communication system supports a limited number of connections and therefore is easy to implement. However, with development of the communication technology, the mobile communication system can not only support conventional communication, but also support, for example, device-to-device (D2D) communication, machine-to-machine (M2M) communication, machine type communication (MTC), vehicle-to-vehicle (V2V) communication, and vehicle-to-everything (V2X) communication, etc. Embodiments of the present disclosure also can be applied to these communication systems.

Optionally, the communication system in embodiments of the present disclosure may be applied in a carrier aggregation (CA) scenario, a dual connectivity (DC) scenario, and a standalone (SA) scenario.

Optionally, the communication system in embodiments of the present disclosure may be applied to an unlicensed spectrum (also regarded as a shared spectrum) or may be applied to a licensed spectrum (also regarded as an unshared spectrum).

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

In embodiments of the disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station or may belong to a base station corresponding to a small cell. The small cell may include a metro cell, a micro cell, a pico cell, a femto cell, and the like. These small cells are characterized by small coverage and low transmission power and are adapted to provide data transmission service with a high rate.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), a terminal device in a cellular internet of things (IoT), or a terminal device in a cellular passive IoT, etc.

In embodiments of the disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelry for physical monitoring, of which each is dedicated to application functions of a certain type and required to be used together with other devices such as a smart phone.

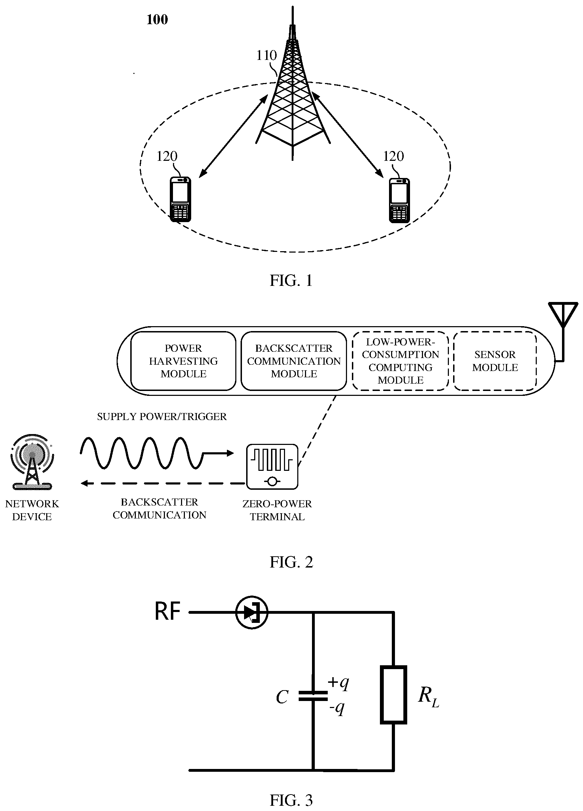

Exemplarily, FIG. 1 illustrates a communication system 100 to which embodiments of the disclosure are applied. The communication system 100 may include a network device 110. The network device 110 may be a device for communicating with a terminal device 120 (also referred to as "communication terminal" or "terminal"). The network device 110 can provide a communication coverage for a specific geographical area and communicate with terminal devices in the coverage area.

FIG. 1 exemplarily illustrates one network device and two terminal devices. Optionally, the communication system 100 may also include multiple network devices, and there can be other quantities of terminal devices in a coverage area of each of the network devices. Embodiments of the disclosure are not limited in this regard.

Optionally, the communication system 100 may further include other network entities such as a network controller, a mobility management entity, or the like, and embodiments of the disclosure are not limited in this regard.

It should be understood that, in embodiments of the disclosure, a device with communication functions in a network/system can be referred to as a "communication device". Taking the communication system 100 illustrated in FIG. 1 as an example, the communication device may include the network device 110 and the terminal device(s) 120 that have communication functions. The network device 110 and the terminal device(s) 120 can be the devices described above and will not be elaborated again herein. The communication device may further include other devices such as a network controller, a mobility management entity, or other network entities in the communication system 100, and embodiments of the disclosure are not limited in this regard.

It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "I" herein generally indicates that the associated objects are in an "or" relationship.

It should be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

In order for a better understanding of technical solutions of embodiments of the disclosure, related art of the embodiments of the disclosure will be elaborated below.

I. Zero-power Communication

Zero-power communication adopts power harvesting and backscatter communication technologies. A zero-power communication network is formed by a network device and a zero-power terminal.

As illustrated in FIG. 2, a network device is configured to transmit a wireless power-supply signal and a downlink communication signal to a zero-power terminal, and the network device is configured to receive a backscattered signal from the zero-power terminal. A basic zero-power terminal includes a power harvesting module, a backscatter communication module, and a low-power calculation module. In addition, the zero-power terminal may also have a memory or a sensor for storing some basic information (such as an item identifier) or acquiring sensing data such as ambient temperature and ambient humidity.

Key technologies for zero-power communication are illustrated as follows.

1. Radio Frequency (RF) Power Harvesting

As illustrated in FIG. 3 an RF power harvesting module harvests power of spatial electromagnetic waves through electromagnetic induction to obtain power for driving a zero-power terminal, for example, driving a low-power demodulation and modulation module, driving a sensor, and reading a memory, etc. Therefore, the zero-power terminal does not need a conventional battery.

2. Backscatter Communication

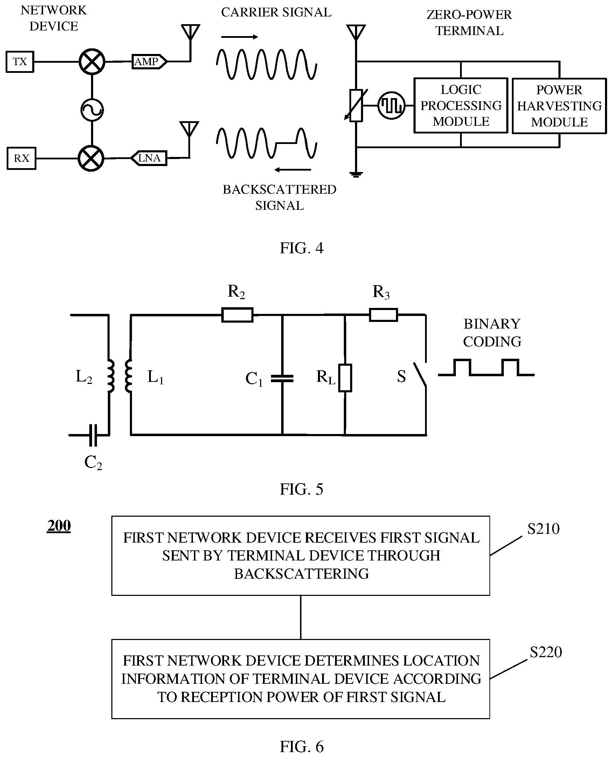

As illustrated in FIG. 4, a zero-power terminal receives a carrier signal sent by a network device, modulates the carrier signal, loads the information to be sent, and radiates a modulated signal through an antenna. This process of information transmission is referred to as backscatter communication. Backscattering is closely related to load modulation. In load modulation, a circuit parameter(s) of an oscillation circuit in a zero-power terminal is adjusted and controlled according to a tick of a data stream, so that the magnitude and other parameters of the impedance of the electronic tag are consequently changed, thus completing modulation. The load modulation is mainly implemented in two ways: resistive load modulation and capacitive load modulation. In resistive load modulation, a resistor is connected in parallel with a load. As illustrated in FIG. 5, on and off of the resistor is under the control of a binary data stream. The on and off of the resistor results in a change in the circuit voltage to achieve amplitude-shift keying (ASK), i.e., the modulation and transmission of a signal is achieved by adjusting the magnitude of a backscattered signal of a zero-power terminal. Similarly, in capacitive load modulation, the on and off of a capacitor can result in a change in the resonant frequency of a circuit to achieve frequency-shift keying (FSK), i.e., the modulation and transmission of a signal is achieved by adjusting an operating frequency of a backscattered signal of a zero-power terminal.

As can be seen, the zero-power terminal performs information modulation on the carrier signal by means of load modulation, so as to achieve backscatter communication. Therefore, the zero-power terminal has significant advantages as follows.

(1) The terminal does not actively transmit a signal and therefore does not require a complex RF circuit such as a power amplifier (PA), an RF filter, etc.
(2) The terminal does not need to actively generate a high-frequency signal and therefore does not need a high-frequency crystal oscillator.
(3) By using backscatter communication, the terminal does not need to consume the terminal's own energy to transmit a signal.2. RF Power Harvesting.

3. Coding Technology

In data transmitted by the electronic tag, binaries 1 and 0 may be expressed in different forms of codes. A radio frequency identification (RFID) system generally uses one of the following coding methods: non return zero (NRZ)-Inverse coding, Manchester coding, unipolar return zero (RZ) coding, differential binary phase (DBP) coding, differential coding, pulse-interval encoding (PIE), bi-phase space coding (FM0), miller encoding, or differential coding. In general, different pulse signals are used to express 0 and 1.

In some scenarios, zero-power terminals can be classified into the following types based on power sources and usage.

1. Passive Zero-power Terminal

A zero-power terminal does not need a built-in battery. When the zero-power terminal gets close to a network device (e.g. a reader in the RFID system), the zero-power terminal is within a near-field of antenna radiation of the network device. In this case, an antenna of the zero-power terminal generates an induced current through electromagnetic induction. The induced current drives a low-power chip circuit in the zero-power terminal to perform demodulation of a forward-link signal and modulation of a reverse-link signal. For a backscatter link, the zero-power terminal transmits a signal through backscattering.

It can be seen that the passive zero-power terminal does not need a built-in battery to drive either the forward link or the reverse link. A passive zero-power terminal truly is a zero-power terminal.

The passive zero-power terminal does not need a battery and has a simple RF circuit and a simple baseband circuit. For example, the passive zero-power terminal does not need components such as a low-noise amplifier (LNA), a PA, a crystal oscillator, an analogue-to-digital converter (ADC), and the like. The passive zero-power terminal thus has advantages including small size, lightweight, low price, and long service life.

2. Semi-passive Zero-power Terminal

A semi-passive zero-power terminal is not equipped with a conventional battery but can use an RF power harvesting module to harvest radio wave energy and store the harvested energy in a power storage unit (e.g., a capacitor). After the power storage unit obtains energy, the power storage unit can drive a low-power chip circuit of a zero-power terminal to perform the demodulation of the forward-link signal and the modulation of the reverse-link signal. For the backscatter link, the zero-power terminal transmits the signal through backscattering.

It can be seen that a semi-passive zero-power terminal does not need a built-in battery to drive either the forward link or the reverse link. Although the passive zero-power terminal uses the energy stored in a capacitor in operation, since the energy is radio wave energy harvested by the power harvesting module, the passive zero-power terminal is also a zero-power terminal.

The semi-passive zero-power terminal inherits many advantages of a passive zero-power terminal, and thus has advantages including small size, lightweight, low price, and long service life.

3. Active Zero-power Terminal

A zero-power terminal used in some scenarios can also be referred to as an active zero-power terminal which can have a built-in battery. The battery is used to drive a low-power chip circuit of the zero-power terminal to perform the demodulation of the forward-link signal and the modulation of the reverse-link signal. However, for the backscatter link, the zero-power terminal transmits a signal through backscattering. Therefore, the zero-power consumption of this kind of terminals is mainly reflected in the fact that the signal transmission in the reverse link does not require the terminal's own power but is based on backscattering.

The built-in battery of the active zero-power terminal power an RFID circuit to increase a reading and writing range of the tag, thereby improving the reliability of communication. Therefore, the active zero-power terminal is used in some scenarios that have high requirements on communication distance, reading delay, and other aspects.

II. Received Signal Strength (RSS) Positioning

RSS positioning technology is a positioning method based on the law of change in signal strength with various propagation distances. RSS positioning technology determines the target position based on signal strengths of signals received by multiple reference nodes from the same target source. RSS positioning technology is currently widely used for indoor positioning. The traditional RSS positioning technology based on geometric measurement firstly needs to measure the RSS of the target received by each monitoring node, then inversely deduces the propagation distance d between each node and the target according to a signal attenuation model, and further estimates the relative geographic position of the target signal source to-be-positioned.

Among cellular passive Internet of Things scenarios, an application scenario involves realizing a positioning function by using a zero-power terminal, such as goods positioning in logistics, animal positioning in a farm in animal husbandry, and low-power positioning for individual users and objects. How to implement positioning by using a zero-power terminal is a problem to be solved.

In order for a better understanding of technical solutions of embodiments of the disclosure, the technical solutions of the disclosure will be described in detail below in connection with embodiments. The following related art as an optional scheme can be arbitrarily combined with the technical solutions of embodiments of the disclosure, which shall all belong to the protection scope of embodiments of the disclosure. Embodiments of the disclosure include at least some of the following.

FIG. 6 is a schematic diagram of a method 200 for wireless communication according to embodiments of the present disclosure. As illustrated in FIG. 6, the method 200 for wireless communication includes at least part of the following.

At S210, a first network device receives a first signal sent by a terminal device through backscattering.

At S220, the first network device determines location information of the terminal device according to a reception power of the first signal.

In embodiments of the present disclosure, the terminal device obtains power for communication and information harvesting by means of power harvesting. That is, before a network device communicates with the terminal device, it may be ensured that the terminal device receives radio waves for wireless power-supply and obtains wireless power by means of power harvesting.

In some embodiments, the power required for the terminal device to send the first signal is obtained through power harvesting.

In some embodiments, the terminal device is a zero-power terminal.

It is understood that the specific manner in which the terminal device obtains power through power harvesting is not limited in the present disclosure. As an example but not a limitation, the terminal device may obtain power through wireless power-supply manners such as RF signals, solar power, pressure, or temperature.

In some embodiments, the RF signal may be regarded as a power-supply signal. The power-supply signal is sent by a power-supply device. The power-supply device may be a network device or may be a third-party device. The third-party device may be a dedicated power-supply node in a cell. The power-supply device may send the power-supply signal continuously or intermittently, so that the terminal device may harvest power, and after obtaining sufficient power, the terminal device may perform corresponding communication such as measuring, transmission of signals, transmission of channels, reception of signals, reception of channels, and so on, and may also perform information harvesting processes.

In some embodiments, the terminal device is configured with a power harvesting module for power harvesting, such as harvesting power from radio waves, solar power, and the like. The terminal device further stores the obtained power in a power storage unit. After obtaining enough power, the power storage unit can drive a chip circuit in the terminal device to perform the demodulation of the forward-link signal and the modulation of the reverse-link signal. The power storage unit can also be used by the terminal device to perform information harvesting.

In embodiments of the present disclosure, the terminal device may perform power harvesting at the same time as information harvesting, or the terminal device may perform information harvesting after the terminal device harvests sufficient energy, which is not limited in the present disclosure.

In embodiments of the present disclosure, the terminal device may be combined with a sensor. The sensor may be configured to generate sensor data, such as temperature data, pressure data, etc. The terminal device may capture the data generated by the sensor. Further, the terminal device may act as a communication device to report the captured sensor data to the network device.

In embodiments of the present disclosure, the sensor may be powered by the terminal device, i.e. the power obtained by the terminal device through power harvesting is also used for powering the sensor. Alternatively, the sensor may be powered by another device. The power-supply manner for the sensor is not limited in the present disclosure.

In some embodiments, the terminal device may capture data from an internal sensor module or from an external sensor module. The manner in which the terminal device and the sensor are combined is not limited in embodiments of the present disclosure.

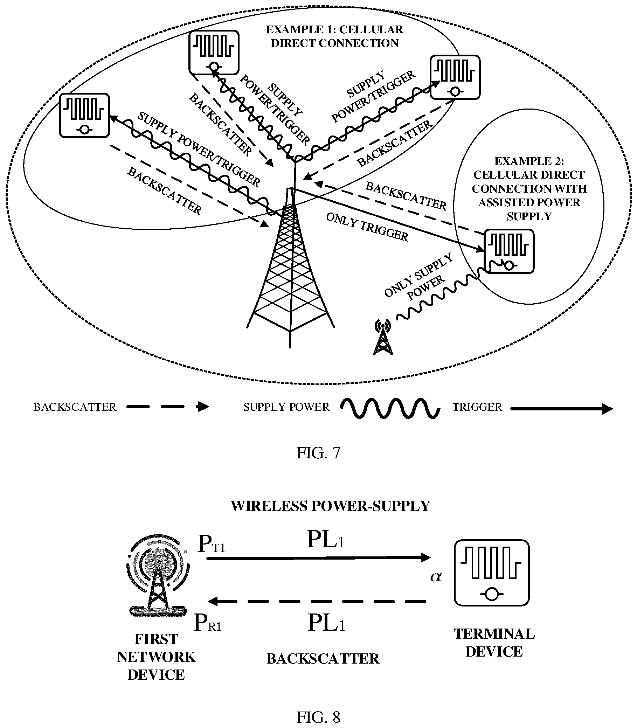

In some embodiments, the terminal device obtains wireless power-supply through the network device, such as example 1 in FIG. 7. The terminal device can obtain wireless power-supply through another node in the network, such as a smartphone, a relay node, a dedicated power-supply node, etc. in the network, where the wireless signals sent by these nodes can also be used to supply power to the terminal, such as example 2 in FIG. 7. In order to obtain power through wireless power-supply, the strength of the power-supply signal arriving at the terminal needs to satisfy a certain threshold (such as -20dBm). Therefore, when the transmission power of the power-supply signal is limited, a range that can be covered by the power-supply signal transmitted by the network device is relatively small and is generally a range of tens of meters. The coverage area of wireless power-supply can be expanded significantly by using more network nodes. In some embodiments, the power-supply signal may be a wireless signal having a wireless power-supply function, such as a carrier signal, a signal carrying information, and the like.

In some embodiments, when the terminal device does not receive the power-supply signal, the terminal device cannot actively send a signal to a network. When the network needs to search for and achieve positioning of the terminal device, the network "activates" the terminal device by sending the power-supply signal. The terminal device can send a signal through backscattering after receiving the power-supply signal. When a network node receives a backscattered signal, the network node calculates the power attenuation in the round trip of the signal according to the reception power of the signal and the transmission power of the power-supply signal sent by the network node, so as to obtain location information of the terminal device.

Specifically, for example, the power-supply signal is generally a carrier signal. The terminal device receives the carrier signal, performs load modulation on the carrier signal by using power provided by the carrier signal to form a backscattered signal carrying information, and sends the backscattered signal carrying information to the network device. In this process, the signals backscattered by terminals of different distances from the network device have different powers, and thus have different power when arriving at the network devices. The network device can determine the path loss in the round-trip transmission based on the difference between the transmission power of the power-supply signal and the reception power of the backscattered signal of the terminal device, and thus determine the path loss in the one-way transmission. Since the path loss of the propagation of the wireless signal is related to the propagation distance, the network device may determine the location information of the terminal based on the reception power of the backscattered signal.

In some embodiments, the manner of transmission of the power-supply signal can be configured by the network. In some embodiments, identification information of the power-supply signal may be carried by the power-supply signal or may be carried by a channel or a signal associated with the power-supply signal.

Embodiments of the present disclosure can be applied to any network device with a function of positioning or power-supply, e.g. a base station, a power-supply node, or a terminal.

In some embodiments, the first signal is a signal obtained after a second signal is backscattered by the terminal device, where the second signal is sent by the first network device, or the second signal is sent by another network device.

In some embodiments, the second signal carries identification information of the second signal. That is, the second signal itself carries its identification information, so that the terminal device receiving the second signal can identify the second signal. For example, a carrier of the second signal is modulated to carry the identification information of the second signal.

In some embodiments, a resource occupied by the second signal indicates the identification information of the second signal. That is, the second signal may carry its identification information implicitly, so that the terminal device receiving the second signal can identify the second signal. Optionally, the resource occupied by the second signal includes at least one of a frequency domain resource, a time domain resource, or a code domain resource.

In some embodiments, the second signal is used to supply power for the terminal device. That is, the second signal is a power supply signal.

In some embodiments, the second signal is used to trigger the terminal device to send a signal through backscattering. Optionally, the second signal at least includes identification information of the terminal device. For example, the second signal is modulated to carry the identification information of the terminal device.

In some embodiments, the second signal is used to trigger a terminal group including the terminal device to send a signal through backscattering. Optionally, the second signal at least includes identification information of the terminal group. For example, the second signal is modulated to carry the identification information of the terminal group.

In some embodiments, the second signal is a positioning signal.

In some embodiments, this second signal is inquiry information used to inquire about a terminal device in a first area. Optionally, some or all of the terminal devices within the first area may send a signal carrying a response information for the inquiry information through backscattering (i.e., the first signal may carry the response information for the inquiry information). The specific content inquired by the inquiry information is not limited in the present disclosure.

Optionally, the first area may be determined by a device sending the second signal. For example, if the device sending the second signal is a base station, the first area is a serving cell corresponding to the base station.

In some embodiments, when the second signal is used to trigger the terminal device to send the signal through backscattering, the second signal is carried by a power-supply signal, or the second signal is carried by a signal or a channel other than the power-supply signal.

In some embodiments, when the second signal is used to trigger the terminal group including the terminal device to send the signal through backscattering, the second signal is carried by the power-supply signal, or the second signal is carried by a signal or a channel other than the power-supply signal.

In some embodiments, when the second signal is the positioning signal, the second signal is carried by the power-supply signal, or the second signal is carried by a signal or a channel other than the power-supply signal.

In some embodiments, when the second signal is the inquiry information used to inquire about a terminal device within the first area, the second signal is carried by the power-supply signal, or the second signal is carried by a signal or a channel other than the power-supply signal.

In some embodiments, the first signal includes but is not limited to at least one of identification information of the terminal device, identification information of the second signal, or a backscatter loss of the terminal device.

Specifically, for example, the first signal is modulated to carry at least one of identification information of the terminal device, identification information of the second signal, or a backscatter loss of the terminal device.

In some embodiments, when the second signal is sent by the first network device, the first network device determines the location information of the terminal device based on the reception power of the first signal and the transmission power of the second signal. That is, at the above-described S220, the first network device determines the location information of the terminal device based on the reception power of the first signal and the transmission power of the second signal.

In embodiment 1, when the second signal is sent by the first network device, the first network device determines a distance between the first network device and the terminal device based on the reception power of the first signal and the transmission power of the second signal, and the first network device determines the location information of the terminal device based on the distance between the first network device and the terminal device.

In some implementations of embodiment 1, the first network device determines a one-way transmission loss between the first network device and the terminal device based on the reception power of the first signal and the transmission power of the second signal, and the first network device determines the distance between the first network device and the terminal device based on the one-way transmission loss between the first network device and the terminal device.

Specifically, for example, when the terminal device receives the second signal, the terminal device identifies the identification information of the second signal and sends the first signal through backscattering. The first signal carries at least one of identification information of the terminal device, identification information of the second signal, or a backscatter loss of the terminal device. After the first network device receives the backscattered signal from the terminal device, the first network device determines that the second signal is a signal transmitted by the network device based on the identification information of the second signal carried by the first signal. The first network device determines the path loss in the round-trip transmission between the first network device and the terminal device based on the reception power of the first signal and the transmission power of the second signal, thereby determining the path loss in the one-way transmission and determining the distance between the terminal device and the first network device based on the relationship between the path loss and the transmission distance.

It is noted that the path loss of the signal includes not only the loss due to the transmission in space, but also a loss of power of a signal due to backscattering performed by the terminal, which is referred to as a backscatter loss here. The path loss in the round-trip transmission of the signal between the first network device and the terminal device includes a two-way transmission loss and the backscatter loss.

In some implementations of embodiment 1, the first network device determines the one-way transmission loss between the first network device and the terminal device according to equation 1.

$$PL_1 = (P_{T1} - P_{R1} - \alpha)/2$$

equation 1

$PL_1$ represents the one-way transmission loss between the first network device and the terminal device, $P_{T1}$ represents the transmission power of the second signal, $P_{R1}$ represents the reception power of the first signal, and $\alpha$ represents the backscatter loss.

Specifically, for example, the second signal is a power supply signal, and the transmission loss between the first network device and the terminal device may be as illustrated in FIG. 8.

It is noted that in the foregoing embodiment 1, the terminal device is positioned by using one network device (i.e., the first network device). When the coverage area of the power-supply signal of the first network device is relatively small, the accuracy of positioning can be ensured. When the terminal device needs to be positioned in a wider area, the accuracy of positioning using a single network device is poor. Positioning can be assisted by three network devices with known positions. The terminal device measures signal strengths of three reference nodes, calculates three distance values based on a physics model, and adopts a geometry-solving approach to obtain the target position.

In embodiment 2, when the second signal is sent by the first network device, the first network device determines a distance between the first network device and the terminal device based on the reception power of the first signal and the transmission power of the second signal, and the first network device determines location information of the terminal device based on the distance between the first network device and the terminal device and a distance between at least one additional network device and the terminal device.

That is, at least one additional network device may be introduced to assist the first network device in positioning the terminal.

In some implementations of embodiment 2, the distance between the at least one additional network device and the terminal device may be obtained by the first network device from the at least one additional network device.

In some implementations of embodiment 2, the at least one additional network device includes a second network device and a third network device. In this case, the first network device determines the location information of the terminal device based on the distance between the first network device and the terminal device, a distance between the second network device and the terminal device, and a distance between the third network device and the terminal device.

Specifically, reference can be made to the related illustration in the foregoing embodiment 1 for illustration of the manner for determining the distance between the first network device and the terminal device, which will not be repeated herein.

In some implementations, the distance between the second network device and the terminal device is determined by the second network device based on a transmission power of a third signal and a reception power of a fourth signal. The third signal is a signal sent by the second network device to the terminal device, and the fourth signal is a signal received by the second network device after the third signal is backscattered by the terminal device.

In some implementations, the second network device determines a one-way transmission loss between the second network device and the terminal device based on the transmission power of the third signal and the reception power of the fourth signal, and the second network device determines a distance between the second network device and the terminal device based on the one-way transmission loss between the second network device and the terminal device.

Specifically, for example, the second network device determines the one-way transmission loss between the second network device and the terminal device according to equation 2.

$$PL_2 = (P_{T2} - P_{R2} - \alpha)/2$$

equation 2

$PL_2$ represents the one-way transmission loss between the second network device and the terminal device, $P_{T2}$ represents the transmission power of the third signal, $P_{R2}$ represents the reception power of the fourth signal, and $\alpha$ represents a backscatter loss.

In some implementations, the distance between the second network device and the terminal device is obtained by the first network device from the second network device. That is, the second network device may determine the one-way transmission loss between the second network device and the terminal device based on the above equation 2, and the second network device determines the distance between the second network device and the terminal device based on the one-way transmission loss between the second network device and the terminal device.

In some implementations, the distance between the second network device and the terminal device is obtained by the first network device from a control device, where the control device at least connects to the first network device and the second network device. Specifically, for example, the control device obtains the transmission power of the third signal and the reception power of the fourth signal from the second network device, so that the control device may determine the one-way transmission loss between the second network device and the terminal device based on the above equation 2. The control device determines the distance between the second network device and the terminal device based on the one-way transmission loss between the second network device and the terminal device.

In some implementations, the distance between the third network device and the terminal device is determined by the third network device based on a transmission power of a fifth signal and a reception power of a sixth signal. The fifth signal is a signal sent by the third network device to the terminal device, and the sixth signal is a signal received by the third network device after the fifth signal is backscattered by the terminal device.

In some implementations, the third network device determines a one-way transmission loss between the third network device and the terminal device based on the transmission power of the fifth signal and the reception power of the sixth signal, and the third network device determines the distance between the third network device and the terminal device based on the one-way transmission loss between the third network device and the terminal device.

Specifically, for example, the third network device determines the one-way transmission loss between the third network device and the terminal device according to equation 3.

$$PL_3 = (P_{T3} - P_{R3} - \alpha)/2$$

<div align="right">equation 3</div>

$PL_3$ represents the one-way transmission loss between the third network device and the terminal device, $P_{T3}$ represents the transmission power of the fifth signal, $P_{R3}$ represents the reception power of the sixth signal, and $\alpha$ represents a backscatter loss.

In some implementations, the distance between the third network device and the terminal device is obtained by the first network device from the third network device. That is, the third network device may determine the one-way transmission loss between the third network device and the terminal device based on the above equation 3, and the third network device determines the distance between the third network device and the terminal device based on the one-way transmission loss between the third network device and the terminal device.

In some implementations, the distance between the third network device and the terminal device is obtained by the first network device from a control device, where the control device at least connects to the first network device and the third network device. Specifically, for example, the control device obtains the transmission power of the fifth signal and the reception power of the sixth signal from the third network device, so that the control device may determine the one-way transmission loss between the third network device and the terminal device based on the above equation 3. The control device determines the distance between the third network device and the terminal device based on the one-way transmission loss between the third network device and the terminal device.

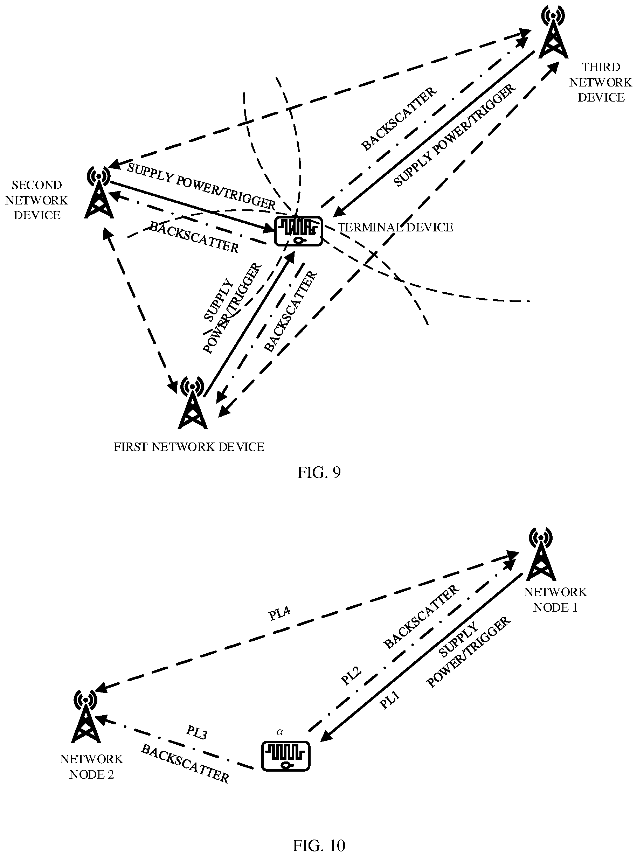

Specifically, for example, as illustrated in FIG. 9, each of three network devices send a power-supply signal to obtain a backscattered signal from the terminal device. Each of the three network devices can estimate a distance from the terminal to the respective network device based on a reception power of the backscattered signal and obtain the target position using a geometry-solving approach. For example, each of the three network devices determines a distance curve that satisfies the measured path loss, and the intersection of the three distance curves is the estimated target position of the terminal. The network devices involved in the positioning have interfaces for information interaction among one another and can jointly calculate the position of the terminal based on respective position information based on the reception powers of the backscattered signals. Alternatively, each of the three network devices has an interface for information interaction with a control device, and the control device determines the position of the terminal based on the position information reported by the network devices involved in positioning.

It should be noted that in the foregoing embodiment 1 and embodiment 2, the second signal is sent by the first network device. However, in some cases, the backscattered signal measured by the network device does not correspond to a backscattered signal of a signal sent by the network device, but corresponds to a signal sent by another network device.

In embodiment 3, when the second signal is sent by a fourth network device, the first network device determines location information of the terminal device based on the reception power of the first signal, the transmission power of the second signal, and a location relationship between the first network device and the fourth network device.

In some implementations of embodiment 3, the transmission power of the second signal is obtained by the first network device from the fourth network device, or the transmission power of the second signal is obtained by the first network device from a control device. The control device at least connects to the first network device and the fourth network device.

Specifically, for example, as illustrated in FIG. 10, network node 1 sends a power-supply signal, and a backscattered signal of a terminal based on the power-supply signal arrives at network node 1 and network node 2. Network node 2 may obtain a power of the power-supply signal sent by network node 1 via an information interface between network node 2 and network node 1. A total path loss (i.e. $PL_1 + PL_3 + \alpha$) of the power-supply signal transmitted from network node 1 and backscattered by the terminal to the network node 2, can be obtained based on a reception power of the received backscattered signal. Network node 2 may further obtain the location of the terminal that satisfies the total path loss using a geometry-solving approach based on the geographic location information of network node 2 and network node 1. Alternatively, network node 2 may obtain the path loss $PL_4$ by measuring the reception power of the power-supply signal of network node 1 and may solve the position of the terminal device based on $PL_1$, $PL_3$, $PL_4$, and $\alpha$, so as to achieve positioning of the terminal device. It is noted that in FIG. 10, network node 1 corresponds to the above-described fourth network device, and network node 2 corresponds to the above-described first network device.

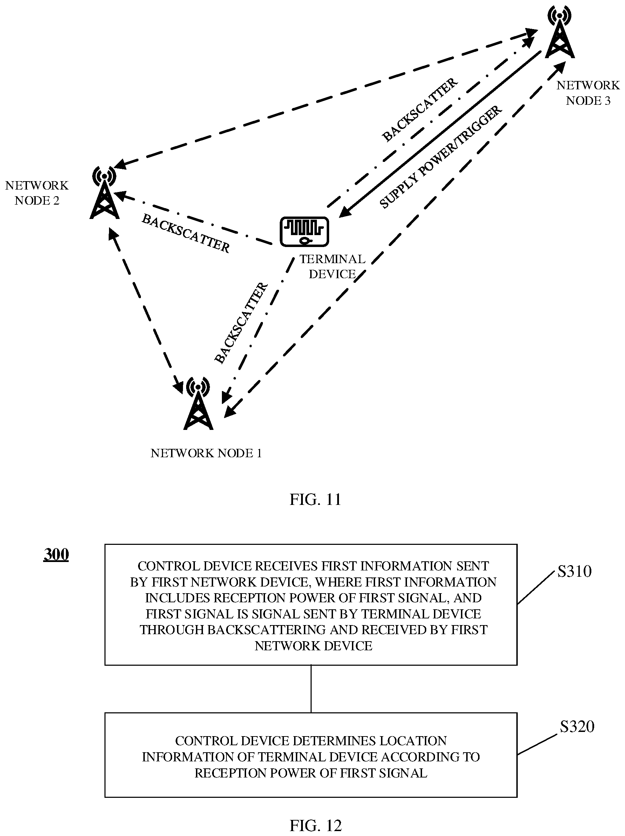

Specifically, for another example, in a process of positioning a terminal using multiple network nodes, as illustrated in FIG. 11, one of the three network nodes sends a power-supply signal. Each of the three network nodes receives a backscattered signal from the terminal and measures a reception power of the backscattered signal. In addition, the three network nodes have information interfaces with one another to solve the position of the terminal by taking the reception powers of the obtained backscattered signals in combination, so as to achieve positioning of the terminal.

Therefore, in embodiments of the present disclosure, the first network device determines the location information of the terminal device according to the reception power of the first signal sent by the terminal device through backscattering, and the power required for sending the first signal by the terminal device is obtained through power harvesting, so that low-power positioning or zero-power positioning can be achieved and implemented with low complexity.

Embodiments of the network device side of the present disclosure are illustrated in detail above with reference to FIG. 6 to FIG. 11. Embodiments of the control device side of the present disclosure are illustrated in detail below with reference to FIG. 12. It is understood that the embodiments of the control device side and the embodiments of the network device side correspond to each other. Reference can be made to the embodiments of the network device side for similar illustrations.

FIG. 12 is a schematic diagram of a method 300 for wireless communication according to embodiments of the present disclosure. As illustrated in FIG. 12, the method 300 for wireless communication includes at least part of the following.

At S310, a control device receives first information sent by a first network device. The first information includes a reception power of a first signal. The first signal is a signal sent by a terminal device through backscattering and received by the first network device.

At S320, the control device determines location information of the terminal device based on the reception power of the first signal.

In embodiments of the present disclosure, the control device may forward or receive information determined or obtained by the network device, including a signal transmission power, a signal reception power, or location information. When the control device receives the information, the control device may forward the information to another network device, or the control device may achieve positioning of the terminal based on the information.

In embodiments of the present disclosure, the terminal device obtains power for communication and information harvesting by means of power harvesting. That is, before a network device communicates with the terminal device, it may be ensured that the terminal device receives radio waves for wireless power-supply and obtains wireless power by means of power harvesting.

In some embodiments, the power required for the terminal device to send the first signal is obtained through power harvesting.

In some embodiments, the terminal device is a zero-power terminal.

It is understood that the specific manner in which the terminal device obtains power through power harvesting is not limited in the present disclosure. As an example but not a limitation, the terminal device may obtain power through wireless power-supply manners such as RF signals, solar power, pressure, or temperature.

In some embodiments, the RF signal may be regarded as a power-supply signal. The power-supply signal is sent by a power-supply device. The power-supply device may be a network device or may be a third-party device. The third-party device may be a dedicated power-supply node in a cell. The power-supply device may send the power-supply signal continuously or intermittently, so that the terminal device may harvest power, and after obtaining sufficient power, the terminal device may perform corresponding communication such as measuring, transmission of signals, transmission of channels, reception of signals, reception of channels, and so on, and may also perform information harvesting processes.

In some embodiments, the terminal device is configured with a power harvesting module for power harvesting, such as harvesting power from radio waves, solar power, and the like. The terminal device further stores the obtained power in a power storage unit. After obtaining enough power, the power storage unit can drive a chip circuit in the terminal device to perform the demodulation of the forward-link signal and the modulation of the reverse-link signal. The power storage unit can also be used by the terminal device to perform information harvesting.

In embodiments of the present disclosure, the terminal device may perform power harvesting at the same time as information harvesting, or the terminal device may perform information harvesting after the terminal device harvests sufficient energy, which is not limited in the present disclosure.

In embodiments of the present disclosure, the terminal device may be combined with a sensor. The sensor may be configured to generate sensor data, such as temperature data, pressure data, etc. The terminal device may capture the data generated by the sensor. Further, the terminal device may act as a communication device to report the captured sensor data to the network device.

In embodiments of the present disclosure, the sensor may be powered by the terminal device, i.e. the power obtained by the terminal device through power harvesting is also used for powering the sensor. Alternatively, the sensor may be powered by another device. The power-supply manner for the sensor is not limited in the present disclosure.

In some embodiments, the terminal device may capture data from an internal sensor module or from an external sensor module. The manner in which the terminal device and the sensor are combined is not limited in embodiments of the present disclosure.

In some embodiments, the terminal device obtains wireless power-supply through the network device, such as example 1 in FIG. 7. The terminal device can obtain wireless power-supply through another node in the network, such as a smartphone, a relay node, a dedicated power-supply node, etc. in the network, where the wireless signals sent by these nodes can also be used to supply power to the terminal, such as example 2 in FIG. 7. In order to obtain power through wireless power-supply, the strength of the power-supply signal arriving at the terminal needs to satisfy a certain threshold (such as -20dBm). Therefore, when the transmission power of the power-supply signal is limited, a range that can be covered by the power-supply signal transmitted by the network device is relatively small and is generally a range of tens of meters. The coverage area of wireless power-supply can be expanded significantly by using more network nodes. In some embodiments, the power-supply signal may be a wireless signal having a wireless power-supply function, such as a carrier signal, a signal carrying information, and the like.

In some embodiments, when the terminal device does not receive the power-supply signal, the terminal device cannot actively send a signal to a network. When the network needs to search for and achieve positioning of the terminal device, the network "activates" the terminal device by sending the power-supply signal. The terminal device can send a signal through backscattering after receiving the power-supply signal. When a network node receives a backscattered signal, the network node calculates the power attenuation in the round trip of the signal according to the reception power of the signal and the transmission power of the power-supply signal sent by the network node, so as to obtain location information of the terminal device.

Specifically, for example, the power-supply signal is generally a carrier signal. The terminal device receives the carrier signal, performs load modulation on the carrier signal by using power provided by the carrier signal to form a backscattered signal carrying information, and sends the backscattered signal carrying information to the network device. In this process, the signals backscattered by terminals of different distances from the network device have different powers, and thus have different power when arriving at the network devices. The network device can determine the path loss in the round-trip transmission based on the difference between the transmission power of the power-supply signal and the reception power of the backscattered signal of the terminal device, and thus determine the path loss in the one-way transmission. Since the path loss of the propagation of the wireless signal is related to the propagation distance, the network device may determine location information of the terminal based on the reception power of the backscattered signal.

In some embodiments, the manner of transmission of the power-supply signal can be configured by the network. In some embodiments, identification information of the power-supply signal may be carried by the power-supply signal or may be carried by a channel or a signal associated with the power-supply signal.

Embodiments of the present disclosure can be applied to any network device with a function of positioning or power-supply, e.g. a base station, a power-supply node, or a terminal.

In some embodiments, the first signal is a signal obtained after a second signal is backscattered by the terminal device, where the second signal is sent by the first network device, or the second signal is sent by another network device.

In some embodiments, the second signal carries identification information of the second signal. That is, the second signal itself carries its identification information, so that the terminal device receiving the second signal can identify the second signal. For example, a carrier of the second signal is modulated to carry the identification information of the second signal.

In some embodiments, a resource occupied by the second signal indicates the identification information of the second signal. That is, the second signal may carry its identification information implicitly, so that the terminal device receiving the second signal can identify the second signal. Optionally, the resource occupied by the second signal includes at least one of a frequency domain resource, a time domain resource, or a code domain resource.

In some embodiments, the second signal is used to supply power for the terminal device. That is, the second signal is a power supply signal.

In some embodiments, the second signal is used to trigger the terminal device to send a signal through backscattering. Optionally, the second signal at least includes identification information of the terminal device. For example, the second signal is modulated to carry the identification information of the terminal device.

In some embodiments, the second signal is used to trigger a terminal group including the terminal device to send a signal through backscattering. Optionally, the second signal at least includes identification information of the terminal group. For example, the second signal is modulated to carry the identification information of the terminal group.

In some embodiments, the second signal is a positioning signal.

In some embodiments, this second signal is inquiry information used to inquire about a terminal device in a first area. Optionally, some or all of the terminal devices within the first area may send a signal carrying a response information for the inquiry information through backscattering (i.e., the first signal may carry the response information for the inquiry information). The specific content inquired by the inquiry information is not limited in the present disclosure.

Optionally, the first area may be determined by a device sending the second signal. For example, if the device sending the second signal is a base station, the first area is a serving cell corresponding to the base station.

In some embodiments, when the second signal is used to trigger the terminal device to send the signal through backscattering, the second signal is carried by a power-supply signal, or the second signal is carried by a signal or a channel other than the power-supply signal.

In some embodiments, when the second signal is used to trigger the terminal group including the terminal device to send the signal through backscattering, the second signal is carried by the power-supply signal, or the second signal is carried by a signal or a channel other than the power-supply signal.

In some embodiments, when the second signal is a positioning signal, the second signal is carried by the power-supply signal, or the second signal is carried by a signal or a channel other than the power-supply signal.

In some embodiments, when the second signal is the inquiry information used to inquire about a terminal device within the first area, the second signal is carried by the power-supply signal, or the second signal is carried by a signal or a channel other than the power-supply signal.

In some embodiments, the first signal includes but is not limited to at least one of identification information of the terminal device, identification information of the second signal, or a backscatter loss of the terminal device.

Specifically, for example, the first signal is modulated to carry at least one of identification information of the terminal device, identification information of the second signal, or a backscatter loss of the terminal device.

In some embodiments, when the second signal is sent by the first network device, the first information further includes a transmission power of the second signal. At the foregoing S320, the control device determines the location information of the terminal device according to the reception power of the first signal and the transmission power of the second signal.

In some embodiments, the control device determines the distance between the first network device and the terminal device according to the reception power of the first signal and the transmission power of the second signal, and the control device determines the location information of the terminal device according to the distance between the first network device and the terminal device.

In some embodiments, the control device determines the distance between the first network device and the terminal device according to the reception power of the first signal and the transmission power of the second signal, and the control device determines the location information according to the distance between the first network device and the terminal device and a distance between at least one additional network device and the terminal device.

In some embodiments, the at least one additional network device includes the second network device and a third network device. In this case, the control device determines the location information of the terminal device according to the distance between the first network device and the terminal device, a distance between the second network device and the terminal device, and a distance between the third network device and the terminal device.

In some embodiments, the distance between the second network device and the terminal device is determined by the second network device based on a transmission power of the third signal and a reception power of a fourth signal. The third signal is a signal sent by the second network device to the terminal device. The fourth signal is a signal received by the second network device after the third signal is backscattered by the terminal device.

In some embodiments, the distance between the second network device and the terminal device is determined by the control device based on the transmission power of the third signal and the reception power of the fourth signal. The third signal is the signal sent by the second network device to the terminal device. The fourth signal is the signal received by the second network device after the third signal is backscattered by the terminal device.

In some embodiments, when the distance between the second network device and the terminal device is determined by the second network device based on the transmission power of the third signal and the reception power of the fourth signal, the distance between the second network device and the terminal device is obtained by the control device from the second network device. The control device at least connects to the first network device and the second network device.

In some embodiments, when the distance between the second network device and the terminal device is determined by the control device based on the transmission power of the third signal and the reception power of the fourth signal, the transmission power of the third signal and the reception power of the fourth signal are obtained by the control device from the second network device. The control device at least connects to the first network device and the second network device.

In some embodiments, the distance between the third network device and the terminal device is determined by the third network device based on a transmission power of a fifth signal and a reception power of a sixth signal. The fifth signal is a signal sent by the third network device to the terminal device. The sixth signal is a signal received by the third network device after the fifth signal is backscattered by the terminal device.

In some embodiments, the distance between the third network device and the terminal device is determined by the control device based on the transmission power of the fifth signal and the reception power of the sixth signal. The fifth signal is the signal sent by the third network device to the terminal device. The sixth signal is the signal received by the third network device after the fifth signal is backscattered by the terminal device.

In some embodiments, when the distance between the third network device and the terminal device is determined by the third network device based on the transmission power of the fifth signal and the reception power of the sixth signal, the distance between the third network device and the terminal device is obtained by the control device from the third network device. The control device at least connects to the first network device and the third network device.

In some embodiments, when the distance between the third network device and the terminal device is determined by the control device based on the transmission power of the fifth signal and the reception power of the sixth signal, the transmission power of the fifth signal and the reception power of the sixth signal are obtained by the control device from the third network device. The control device at least connects to the first network device and the third network device.

In some embodiments, the control device determines a one-way transmission loss between the first network device and the terminal device according to the reception power of the first signal and the transmission power of the second signal, and the control device determines the distance between the first network device and the terminal device according to the one-way transmission loss between the first network device and the terminal device.

In some embodiments, the control device determines the one-way transmission loss between the first network device and the terminal device according to an equation:

$$PL_1 = (P_{T1} - P_{R1} - \alpha)/2$$

$PL_1$ represents the one-way transmission loss between the first network device and the terminal device, $P_{T1}$ represents the transmission power of the second signal, $P_{R1}$ represents the reception power of the first signal, and $\alpha$ represents a backscatter loss.

In some embodiments, the control device determines the location information of the terminal device based on the reception power of the first signal, the transmission power of the second signal, and a location relationship between the first network device and the fourth network device.

In some embodiments, the transmission power of the second signal is obtained by the control device from the fourth network device. The control device at least connects to the first network device and the fourth network device.

Therefore, in embodiments of the present disclosure, the control device determines the location information of the terminal device according to the reception power of the first signal sent by the terminal device through backscattering, and the power required for sending the first signal by the terminal device is obtained through power harvesting, so that low-power positioning or zero-power positioning can be achieved and implemented with low complexity.

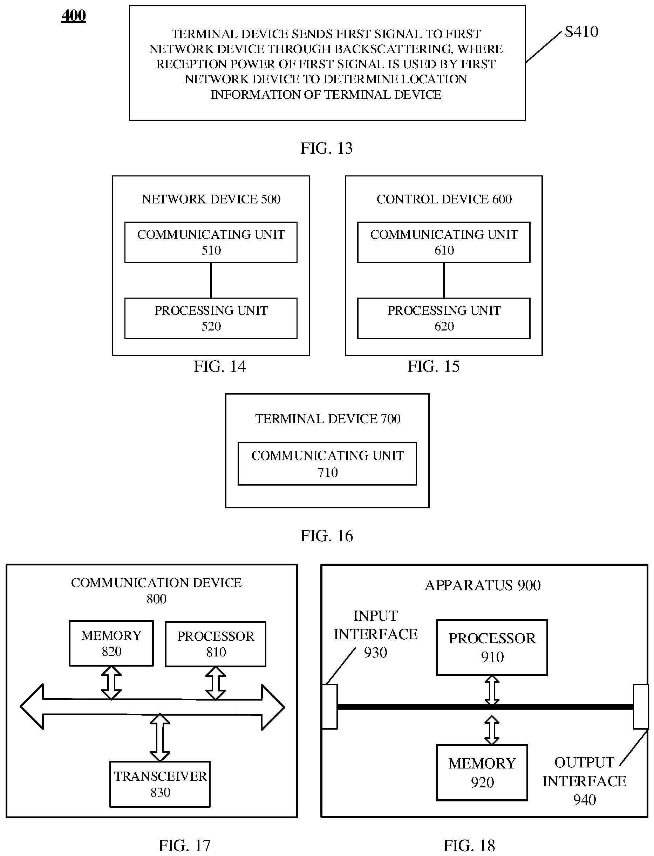

Embodiments of the network device side of the present disclosure are illustrated in detail above with reference to FIG. 6 to FIG. 11. Embodiments of the terminal device side of the present disclosure are illustrated in detail below with reference to FIG. 13. It is understood that the embodiments of the terminal device side and the embodiments of the network device side correspond to each other. Reference can be made to the embodiments of the network device side for similar illustrations.

FIG. 13 is a schematic diagram of a method 400 for wireless communication according to embodiments of the present disclosure. As illustrated in FIG. 13, the method 400 for wireless communication includes at least part of the following.

At S410, a terminal device sends a first signal to a first network device through backscattering, where a reception power of the first signal is used by the first network device to determine location information of the terminal device.

In embodiments of the present disclosure, the terminal device obtains power for communication and information harvesting by means of power harvesting. That is, before a network device communicates with the terminal device, it may be ensured that the terminal device receives radio waves for wireless power-supply and obtains wireless power by means of power harvesting.

In some embodiments, the power required for the terminal device to send the first signal is obtained through power harvesting.

In some embodiments, the terminal device is a zero-power terminal.

It is understood that the specific manner in which the terminal device obtains power through power harvesting is not limited in the present disclosure. As an example but not a limitation, the terminal device may obtain power through wireless power-supply manners such as RF signals, solar power, pressure, or temperature.

In some embodiments, the RF signal may be regarded as a power-supply signal. The power-supply signal is sent by a power-supply device. The power-supply device may be the network device or may be a third-party device. The third-party device may be a dedicated power-supply node in a cell. The power-supply device may send the power-supply signal continuously or intermittently, so that the terminal device may harvest power, and after obtaining sufficient power, the terminal device may perform corresponding communication such as measuring, transmission of signals, transmission of channels, reception of signals, reception of channels, and so on, and may also perform information harvesting processes.

In some embodiments, the terminal device is configured with a power harvesting module for power harvesting, such as harvesting power from radio waves, solar power, and the like. The terminal device further stores the obtained power in a power storage unit. After obtaining enough power, the power storage unit can drive a chip circuit in the terminal device to perform the demodulation of the forward-link signal and the modulation of the reverse-link signal. The power storage unit can also be used by the terminal device to perform information harvesting.

In embodiments of the present disclosure, the terminal device may perform power harvesting at the same time as information harvesting, or the terminal device may perform information harvesting after the terminal device harvests sufficient energy, which is not limited in the present disclosure.

In embodiments of the present disclosure, the terminal device may be combined with a sensor. The sensor may be configured to generate sensor data, such as temperature data, pressure data, etc. The terminal device may capture the data generated by the sensor. Further, the terminal device may act as a communication device to report the captured sensor data to the network device.

In embodiments of the present disclosure, the sensor may be powered by the terminal device, i.e. the power obtained by the terminal device through power harvesting is also used for powering the sensor. Alternatively, the sensor may be powered by another device. The power-supply manner for the sensor is not limited in the present disclosure.

In some embodiments, the terminal device may capture data from an internal sensor module or from an external sensor module. The manner in which the terminal device and the sensor are combined is not limited in embodiments of the present disclosure.

In some embodiments, the terminal device obtains wireless power-supply through the network device, such as example 1 in FIG. 7. The terminal device can obtain wireless power-supply through another node in the network, such as a smartphone, a relay node, a dedicated power-supply node, etc. in the network, where the wireless signals sent by these nodes can also be used to supply power to the terminal, such as example 2 in FIG. 7. In order to obtain power through wireless power-supply, the strength of the power-supply signal arriving at the terminal needs to satisfy a certain threshold (such as -20dBm). Therefore, when the transmission power of the power-supply signal is limited, a range that can be covered by the power-supply signal transmitted by the network device is relatively small and is generally a range of tens of meters. The coverage area of wireless power-supply can be expanded significantly by using more network nodes. In some embodiments, the power-supply signal may be a wireless signal having a wireless power-supply function, such as a carrier signal, a signal carrying information, and the like.

In some embodiments, when the terminal device does not receive the power-supply signal, the terminal device cannot actively send a signal to the network. When the network needs to search for and achieve positioning of the terminal device, the network "activates" the terminal device by sending the power-supply signal. The terminal device can send a signal through backscattering after receiving the power-supply signal. When the network node receives a backscattered signal, the network node calculates the power attenuation in the round trip of the signal according to the reception power of the signal and the transmission power of the power-supply signal sent by the network node, so as to obtain the location information of the terminal device.

Specifically, for example, the power-supply signal is generally a carrier signal. The terminal device receives the carrier signal, performs load modulation on the carrier signal by using power provided by the carrier signal to form a backscattered signal carrying information, and sends the backscattered signal carrying information to the network device. In this process, the signals backscattered by terminals of different distances from the network device have different powers, and thus have different power when arriving at the network devices. The network device can determine the path loss in the round-trip transmission based on the difference between the transmission power of the power-supply signal and the reception power of the backscattered signal of the terminal device, and thus determine the path loss in the one-way transmission. Since the path loss of the propagation of the wireless signal is related to the propagation distance, the network device may determine location information of the terminal based on the reception power of the backscattered signal.

In some embodiments, the manner of transmission of the power-supply signal can be configured by the network.

In some embodiments, identification information of the power-supply signal may be carried by the power-supply signal or may be carried by a channel or a signal associated with the power-supply signal.

Embodiments of the present disclosure can be applied to any network device with a function of positioning or power-supply, e.g. a base station, a power-supply node, or a terminal.

In some embodiments, the first signal is a signal obtained after a second signal is backscattered by the terminal device, where the second signal is sent by the first network device, or the second signal is sent by another network device.

In some embodiments, the second signal carries identification information of the second signal. That is, the second signal itself carries its identification information, so that the terminal device receiving the second signal can identify the second signal. For example, a carrier of the second signal is modulated to carry the identification information of the second signal.

In some embodiments, a resource occupied by the second signal indicates the identification information of the second signal. That is, the second signal may carry its identification information implicitly, so that the terminal device receiving the second signal can identify the second signal. Optionally, the resource occupied by the second signal includes at least one of: a frequency domain resource, a time domain resource, or a code domain resource.

In some embodiments, the second signal is used to supply power for the terminal device. That is, the second signal is a power supply signal.

In some embodiments, the second signal is used to trigger the terminal device to send a signal through backscattering. Optionally, the second signal at least includes identification information of the terminal device. For example, the second signal is modulated to carry the identification information of the terminal device.

In some embodiments, the second signal is used to trigger a terminal group including the terminal device to send a signal through backscattering. Optionally, the second signal at least includes identification information of the terminal group. For example, the second signal is modulated to carry the identification information of the terminal group.

In some embodiments, the second signal is a positioning signal.

In some embodiments, this second signal is inquiry information used to inquire about a terminal device in a first area. Optionally, some or all of the terminal devices within the first area may send a signal carrying a response information for the inquiry information through backscattering (i.e., the first signal may carry the response information for the inquiry information). The specific content inquired by the inquiry information is not limited in the present disclosure.

Optionally, the first area may be determined by a device sending the second signal. For example, if the device sending the second signal is a base station, the first area is a serving cell corresponding to the base station.

In some embodiments, when the second signal is used to trigger the terminal device to send the signal through backscattering, the second signal is carried by a power-supply signal, or the second signal is carried by a signal or a channel other than the power-supply signal.

In some embodiments, when the second signal is used to trigger the terminal group including the terminal device to send the signal through backscattering, the second signal is carried by the power-supply signal, or the second signal is carried by a signal or a channel other than the power-supply signal.

In some embodiments, when the second signal is a positioning signal, the second signal is carried by the power-supply signal, or the second signal is carried by a signal or a channel other than the power-supply signal.

In some embodiments, when the second signal is the inquiry information used to inquire about a terminal device within the first area, the second signal is carried by the power-supply signal, or the second signal is carried by a signal or a channel other than the power-supply signal.

In some embodiments, the first signal includes but is not limited to at least one of: the identification information of the terminal device, the identification information of the second signal, or a backscatter loss of the terminal device.

Specifically, for example, the first signal is modulated to carry at least one of: the identification information of the terminal device, the identification information of the second signal, or the backscatter loss of the terminal device.

In some embodiments, when the second signal is sent by the first network device, the reception power of the first signal and transmission power of the second signal are used by the first network device to determine a distance between the first network device and the terminal device, and the distance between the first network device and the terminal device is used by the first network device to determine the location information of the terminal device.

In some embodiments, when the second signal is sent by the first network device, the reception power of the first signal and the transmission power of the second signal are used by the first network device to determine the distance between the first network device and the terminal device, and the distance between the first network device and the terminal device is used by the first network device to determine the location information of the terminal device in combination with a distance between a second network device and the terminal device and a distance between a third network device and the terminal device.

In some embodiments, the distance between the second network device and the terminal device is determined by the second network device based on a transmission power of a third signal and a reception power of a fourth signal. The third signal is a signal sent by the second network device to the terminal device. The fourth signal is a signal received by the second network device after the third signal is backscattered by the terminal device.

In some embodiments, the distance between the second network device and the terminal device is obtained by the first network device from the second network device, or the distance between the second network device and the terminal device is obtained by the first network device from a control device. The control device at least connects to the first network device and the second network device.

In some embodiments, the distance between the third network device and the terminal device is determined by the third network device based on a transmission power of a fifth signal and a reception power of a sixth signal. The fifth signal is a signal sent by the third network device to the terminal device. The sixth signal is a signal received by the third network device after the fifth signal is backscattered by the terminal device.

In some embodiments, the distance between the third network device and the terminal device is obtained by the first network device from the third network device, or the distance between the third network device and the terminal device is obtained by the first network device from the control device. The control device at least connects to the first network device and the third network device.

In some embodiments, the reception power of the first signal and the transmission power of the second signal are used by the first network device to determine a one-way transmission loss between the first network device and the terminal device, and the one-way transmission loss between the first network device and the terminal device is used by the first network device to determine the distance between the first network device and the terminal device.

In some embodiments, the reception power of the first signal and the transmission power of the second signal are used by the first network device to determine the one-way transmission loss between the first network device and the terminal device based on an equation:

$$PL_1 = (P_{T1} - P_{R1} - \alpha)/2$$

$PL_1$ represents the one-way transmission loss between the first network device and the terminal device, $P_{T1}$ represents the transmission power of the second signal, $P_{R1}$ represents the reception power of the first signal, and $\alpha$ represents the backscatter loss.

In some embodiments, when the second signal is sent by a fourth network device, the reception power of the first signal and the transmission power of the second signal are used by the first network device to determine the location information of the terminal device in combination with a location relationship between the first network device and the fourth network device.

In some embodiments, the transmission power of the second signal is obtained by the first network device from the fourth network device, or the transmission power of the second signal is obtained by the first network device from the control device. The control device at least connects to the first network device and the fourth network device.

Therefore, in embodiments of the present disclosure, the first network device determines the location information of the terminal device according to the reception power of the first signal sent by the terminal device through backscattering, and the power required for sending the first signal by the terminal device is obtained through power harvesting, so that low-power positioning or zero-power positioning can be achieved and implemented with low complexity.

Method embodiments of the present disclosure are illustrated in detail above with reference to FIG. 6 to FIG. 13. Apparatus embodiments of the present disclosure are illustrated in detail below with reference to FIG. 14 to FIG. 16. It is understood that the apparatus embodiments and the method embodiments correspond to each other. Reference can be made to the method embodiments for similar illustrations.

FIG. 14 is a schematic block diagram of a network device 500 according to embodiments of the present disclosure. As illustrated in FIG. 14, the network device 500 is a first network device, and the network device 500 includes a communicating unit 510 and a processing unit 520. The communicating unit 510 is configured to receive a first signal sent by a terminal device through backscattering. The processing unit 520 is configured to determine location information of the terminal device according to a reception power of the first signal.

In some embodiments, the first signal is a signal obtained after a second signal is backscattered by the terminal device, where the second signal is sent by the first network device, or the second signal is sent by another network device.

In some embodiments, when the second signal is sent by the first network device, the processing unit 520 is specifically configured to determine the location information of the terminal device according to the reception power of the first signal and transmission power of the second signal.

In some embodiments, the processing unit 520 is specifically configured to determine a distance between the first network device and the terminal device according to the reception power of the first signal and the transmission power of the second signal and determine the location information of the terminal device according to the distance between the first network device and the terminal device.

In some embodiments, the processing unit 520 is specifically configured to determine the distance between the first network device and the terminal device according to the reception power of the first signal and the transmission power of the second signal and determine the location information of the terminal device according to the distance between the first network device and the terminal device and a distance between at least one additional network device and the terminal device.

In some embodiments, the at least one additional network device includes a second network device and a third network device.

The processing unit 520 is specifically configured to determine the location information of the terminal device according to the distance between the first network device and the terminal device, a distance between the second network device and the terminal device, and a distance between the third network device and the terminal device.

In some embodiments, the distance between the second network device and the terminal device is determined by the second network device based on a transmission power of a third signal and a reception power of a fourth signal.

The third signal is a signal sent by the second network device to the terminal device. The fourth signal is a signal received by the second network device after the third signal is backscattered by the terminal device.

In some embodiments, the distance between the second network device and the terminal device is obtained by the first network device from the second network device, or the distance between the second network device and the terminal device is obtained by the first network device from a control device.

The control device at least connects to the first network device and the second network device.

In some embodiments, the distance between the third network device and the terminal device is determined by the third network device based on a transmission power of a fifth signal and a reception power of a sixth signal.

The fifth signal is a signal sent by the third network device to the terminal device. The sixth signal is a signal received by the third network device after the fifth signal is backscattered by the terminal device.

In some embodiments, the distance between the third network device and the terminal device is obtained by the first network device from the third network device, or the distance between the third network device and the terminal device is obtained by the first network device from the control device.

The control device at least connects to the first network device and the third network device.

In some embodiments, the processing unit 520 is specifically configured to determine a one-way transmission loss between the first network device and the terminal device according to the reception power of the first signal and the transmission power of the second signal and determine the distance between the first network device and the terminal device according to the one-way transmission loss between the first network device and the terminal device.

In some embodiments, the processing unit 520 is specifically configured to determine the one-way transmission loss between the first network device and the terminal device according to an equation:

$$PL_1 = (P_{T1} - P_{R1} - \alpha)/2$$

$PL_1$ represents the one-way transmission loss between the first network device and the terminal device, $P_{T1}$ represents the transmission power of the second signal, $P_{R1}$ represents the reception power of the first signal, and $\alpha$ represents a backscatter loss.

In some embodiments, when the second signal is sent by the fourth signal, the processing unit 520 is specifically configured to determine the location information of the terminal device according to the reception power of the first signal, the transmission power of the second signal, and a location relationship between the first network device and the fourth network device.

In some embodiments, the transmission power of the second signal is obtained by the first network device from the fourth network device, or the transmission power of the second signal is obtained by the first network device from the control device. The control device at least connects to the first network device and the fourth network device.

In some embodiments, the second signal is used to supply power for the terminal device, or the second signal is used to trigger the terminal device to send a signal through backscattering, or the second signal is used to trigger a terminal group including the terminal device to send the signal through backscattering, or the second signal is a positioning signal, or the second signal is inquiry information used to inquire about a terminal device in a first area.

In some embodiments, the second signal carries identification information of the second signal, or a resource occupied by the second signal indicates the identification information of the second signal.

In some embodiments, the resource occupied by the second signal includes at least one of: a frequency domain resource, a time domain resource, or a code domain resource.

In some embodiments, when the second signal is used to trigger the terminal device to send the signal through backscattering, the second signal includes identification information of the terminal device.

Alternatively, when the second signal is used to trigger the terminal group including the terminal device to send the signal through backscattering, the second signal includes identification information of the terminal group.

In some embodiments, when the second signal is used to trigger the terminal device to send the signal through backscattering, the second signal is carried by a power-supply signal, or the second signal is carried by a signal or a channel other than the power-supply signal.

Alternatively, when the second signal is used to trigger the terminal group including the terminal device to send the signal through backscattering, the second signal is carried by the power-supply signal, or the second signal is carried by a signal or a channel other than the power-supply signal.

Alternatively, when the second signal is the positioning signal, the second signal is carried by the power-supply signal, or the second signal is carried by a signal or a channel other than the power-supply signal.

Alternatively, when the second signal is the inquiry information used to inquire about a terminal device in the first area, the second signal is carried by the power-supply signal, or the second signal is carried by a signal or a channel other than the power-supply signal.

In some embodiments, the first signal includes at least one of: the identification information of the terminal device, the identification information of the second signal, or a backscatter loss of the terminal device.

In some embodiments, the foregoing communicating unit may be a communication interface or a transceiver, or an input/output interface of a communication chip or a system-on-chip (SOC). The processing unit may be one or more processors.

It is understood that, the network device 500 according to embodiments of the disclosure may correspond to the first network device in the method embodiments of the present disclosure, and the foregoing and other operations and/or functions of various units in the network device 500 are respectively intended for implementing corresponding operations of the network device in the method 200 illustrated in FIG. 6, which will not be described again herein for the sake of brevity.

FIG. 15 is a schematic block diagram of a control device 600 according to embodiments of the present disclosure. As illustrated in FIG. 15, the control device 600 includes a communicating unit 610 and a processing unit 620. The communicating unit 610 is configured to receive first information sent by a first network device, where the first information includes a reception power of a first signal and the first signal is a signal sent by a terminal device through backscattering and received by the first network device. The processing unit 620 is configured to determine location information of the terminal device according to the reception power of the first signal.

In some embodiments, the first signal is a signal obtained after a second signal is backscattered by the terminal device, where the second signal is sent by the first network device, or the second signal is sent by another network device.

In some embodiments, when the second signal is sent by the first network device, the first information further includes a transmission power of the second signal.

The processing unit 620 is specifically configured to determine the location information of the terminal device according to the reception power of the first signal and the transmission power of the second signal.

In some embodiments, the processing unit 620 is specifically configured to determine a distance between the first network device and the terminal device according to the reception power of the first signal and the transmission power of the second signal and determine the location information of the terminal device according to the distance between the first network device and the terminal device.

In some embodiments, the processing unit 620 is specifically configured to determine the distance between the first network device and the terminal device according to the reception power of the first signal and the transmission power of the second signal and determine the location information of the terminal device according to the distance between the first network device and the terminal device and a distance between at least one additional network device and the terminal device.

In some embodiments, the at least one additional network device includes a second network device and a third network device.

The processing unit 620 is specifically configured to determine the location information of the terminal device according to the distance between the first network device and the terminal device, a distance between the second network device and the terminal device, and a distance between the third network device and the terminal device.

In some embodiments, the distance between the second network device and the terminal device is determined by the second network device based on a transmission power of a third signal and a reception power of a fourth signal.

Alternatively, the distance between the second network device and the terminal device is determined by the control device based on the transmission power of the third signal and the reception power of the fourth signal.

The third signal is a signal sent by the second network device to the terminal device. The fourth signal is a signal received by the second network device after the third signal is backscattered by the terminal device.

In some embodiment, when the distance between the second network device and the terminal device is determined by the second network device based on the transmission power of the third signal and the reception power of the fourth signal, the distance between the second network device and the terminal device is obtained by the control device from the second network device.

When the distance between the second network device and the terminal device is determined by the control device based on the transmission power of the third signal and the reception power of the fourth signal, the transmission power of the third signal and the reception power of the fourth signal are obtained by the control device from the second network device.

The control device at least connects to the first network device and the second network device.

In some embodiments, the distance between the third network device and the terminal device is determined by the third network device based on a transmission power of a fifth signal and a reception power of a sixth signal.

Alternatively, the distance between the third network device and the terminal device is determined by the control device based on the transmission power of the fifth signal and the reception power of the sixth signal.

The fifth signal is a signal sent by the third network device to the terminal device. The sixth signal is a signal received by the third network device after the fifth signal is backscattered by the terminal device.

In some embodiments, when the distance between the third network device and the terminal device is determined by the third network device based on the transmission power of the fifth signal and the reception power of the sixth signal, the distance between the third network device and the terminal device is obtained by the control device from the third network device.

When the distance between the third network device and the terminal device is determined by the control device based on the transmission power of the fifth signal and the reception power of the sixth signal, the transmission power of the fifth signal and the reception power of the sixth signal are obtained by the control device from the third network device.

The control device at least connects to the first network device and the third network device.

In some embodiments, the processing unit 620 is specifically configured to determine a one-way transmission loss between the first network device and the terminal device according to the reception power of the first signal and the transmission power of the second signal and determine the distance between the first network device and the terminal device according to the one-way transmission loss between the first network device and the terminal device.

In some embodiments, the processing unit 620 is specifically configured to determine the one-way transmission loss between the first network device and the terminal device according to an equation:

$$PL_1 = (P_{T1} - P_{R1} - \alpha)/2$$

$PL_1$ represents the one-way transmission loss between the first network device and the terminal device, $P_{T1}$ represents the transmission power of the second signal, $P_{R1}$ represents the reception power of the first signal, and $\alpha$ represents a backscatter loss.

In some embodiments, when the second signal is sent by the fourth signal, the processing unit 620 is specifically configured to determine the location information of the terminal device according to the reception power of the first signal, the transmission power of the second signal, and a location relationship between the first network device and the fourth network device.

In some embodiments, the transmission power of the second signal is obtained by the control device from the fourth network device. The control device at least connects to the first network device and the fourth network device.

In some embodiments, the second signal is used to supply power for the terminal device, or the second signal is used to trigger the terminal device to send a signal through backscattering, or the second signal is used to trigger a terminal group including the terminal device to send the signal through backscattering, or the second signal is a positioning signal, or the second signal is inquiry information used to inquire about a terminal device in a first area.

In some embodiments, the second signal carries identification information of the second signal, or a resource occupied by the second signal indicates the identification information of the second signal.

In some embodiments, the resource occupied by the second signal includes at least one of: a frequency domain resource, a time domain resource, or a code domain resource.

In some embodiments, when the second signal is used to trigger the terminal device to send the signal through backscattering, the second signal includes identification information of the terminal device.

Alternatively, when the second signal is used to trigger the terminal group including the terminal device to send the signal through backscattering, the second signal includes identification information of the terminal group.

In some embodiments, when the second signal is used to trigger the terminal device to send the signal through backscattering, the second signal is carried by a power-supply signal, or the second signal is carried by a signal or a channel other than the power-supply signal.

Alternatively, when the second signal is used to trigger the terminal group including the terminal device to send the signal through backscattering, the second signal is carried by the power-supply signal, or the second signal is carried by a signal or a channel other than the power-supply signal.

Alternatively, when the second signal is the positioning signal, the second signal is carried by the power-supply signal, or the second signal is carried by a signal or a channel other than the power-supply signal.

Alternatively, when the second signal is the inquiry information used to inquire about a terminal device in the first area, the second signal is carried by the power-supply signal, or the second signal is carried by a signal or a channel other than the power-supply signal.

In some embodiments, the first signal includes at least one of: the identification information of the terminal device, the identification information of the second signal, or a backscatter loss of the terminal device.

In some embodiments, the foregoing communicating unit may be a communication interface or a transceiver, or an input/output interface of a communication chip or a SOC. The processing unit may be one or more processors.

It is understood that, the network device 600 according to embodiments of the disclosure may correspond to the control device in the method embodiments of the present disclosure, and the foregoing and other operations and/or functions of various units in the control device 600 are respectively intended for implementing corresponding operations of the control device in the method 300 illustrated in FIG. 12, which will not be described again herein for the sake of brevity.

FIG. 16 is a schematic block diagram of a terminal device 700 according to embodiments of the present disclosure. As illustrated in FIG. 16, the control device 700 includes a communicating unit 710 configured to send a first signal to a first network device through backscattering, where a reception power of the first signal is used by the first network device to determine location information of the terminal device.

In some embodiments, the first signal is a signal obtained after a second signal is backscattered by the terminal device, where the second signal is sent by the first network device, or the second signal is sent by another network device.

In some embodiments, when the second signal is sent by the first network device, the reception power of the first signal being used by the first network device to determine the location information of the terminal device includes: the reception power of the first signal and a transmission power of the second signal being used by the first network device to determine a distance between the first network device and the terminal device, and the distance between the first network device and the terminal device being used by the first network device to determine the location information of the terminal device.

In some embodiments, when the second signal is sent by the first network device, the reception power of the first signal being used by the first network device to determine the location information of the terminal device includes: the reception power of the first signal and the transmission power of the second signal being used by the first network device to determine the distance between the first network device and the terminal device, and the distance between the first network device and the terminal device being used by the first network device to determine the location information of the terminal device in combination with a distance between a second network device and the terminal device and a distance between a third network device and the terminal device.

In some embodiments, the distance between the second network device and the terminal device is determined by the second network device based on a transmission power of a third signal and a reception power of a fourth signal.

The third signal is a signal sent by the second network device to the terminal device. The fourth signal is a signal received by the second network device after the third signal is backscattered by the terminal device.

In some embodiments, the distance between the second network device and the terminal device is obtained by the first network device from the second network device, or the distance between the second network device and the terminal device is obtained by the first network device from the control device.

The control device at least connects to the first network device and the second network device.

In some embodiments, the distance between the third network device and the terminal device is determined by the third network device based on a transmission power of a fifth signal and a reception power of a sixth signal.

The fifth signal is a signal sent by the third network device to the terminal device. The sixth signal is a signal received by the third network device after the fifth signal is backscattered by the terminal device.

In some embodiments, the distance between the third network device and the terminal device is obtained by the first network device from the third network device, or the distance between the third network device and the terminal device is obtained by the first network device from the control device.

The control device at least connects to the first network device and the third network device.

In some embodiments, the reception power of the first signal and the transmission power of the second signal being used by the first network device to determine the distance between the first network device and the terminal device includes: the reception power of the first signal and the transmission power of the second signal being used by the first network device to determine a one-way transmission loss between the first network device and the terminal device, and the one-way transmission loss between the first network device and the terminal device being used by the first network device to determine the distance between the first network device and the terminal device.

In some embodiments, the reception power of the first signal and the transmission power of the second signal are used by the first network device to determine the one-way transmission loss between the first network device and the terminal device according to an equation:

$$PL_1 = (P_{T1} - P_{R1} - \alpha)/2$$

$PL_1$ represents the one-way transmission loss between the first network device and the terminal device, $P_{T1}$ represents the transmission power of the second signal, $P_{R1}$ represents the reception power of the first signal, and $\alpha$ represents a backscatter loss.

In some embodiments, when the second signal is sent by a fourth network device, the reception power of the first signal being used by the first network device to determine the location information of the terminal device includes: the reception power of the first signal and the transmission power of the second signal being used by the first network device to determine the location information of the terminal device in combination with a location relationship between the first network device and the fourth network device.

In some embodiments, the transmission power of the second signal is obtained by the first network device from the fourth network device, or the transmission power of the second signal is obtained by the first network device from the control device. The control device at least connects to the first network device and the fourth network device.

In some embodiments, the second signal is used to supply power for the terminal device, or the second signal is used to trigger the terminal device to send a signal through backscattering, or the second signal is used to trigger a terminal group including the terminal device to send the signal through backscattering, or the second signal is a positioning signal, or the second signal is inquiry information used to inquire about a terminal device in a first area.

In some embodiments, the second signal carries identification information of the second signal, or a resource occupied by the second signal indicates the identification information of the second signal.

In some embodiments, the resource occupied by the second signal includes at least one of: a frequency domain resource, a time domain resource, or a code domain resource.

In some embodiments, when the second signal is used to trigger the terminal device to send the signal through backscattering, the second signal includes identification information of the terminal device.

Alternatively, when the second signal is used to trigger the terminal group including the terminal device to send the signal through backscattering, the second signal includes identification information of the terminal group.

In some embodiments, when the second signal is used to trigger the terminal device to send the signal through backscattering, the second signal is carried by a power-supply signal, or the second signal is carried by a signal or a channel other than the power-supply signal.

Alternatively, when the second signal is used to trigger the terminal group including the terminal device to send the signal through backscattering, the second signal is carried by the power-supply signal, or the second signal is carried by a signal or a channel other than the power-supply signal.

Alternatively, when the second signal is the positioning signal, the second signal is carried by the power-supply signal, or the second signal is carried by a signal or a channel other than the power-supply signal.

Alternatively, when the second signal is the inquiry information used to inquire about a terminal device in the first area, the second signal is carried by the power-supply signal, or the second signal is carried by a signal or a channel other than the power-supply signal.

In some embodiments, the first signal includes at least one of: the identification information of the terminal device, the identification information of the second signal, or a backscatter loss of the terminal device.

In some embodiments, the foregoing communicating unit may be a communication interface or a transceiver, or an input/output interface of a communication chip or a SOC.

It is understood that, the terminal device 700 according to embodiments of the disclosure may correspond to the terminal device in the method embodiments of the present disclosure, and the foregoing and other operations and/or functions of various units in the terminal device 700 are respectively intended for implementing corresponding operations of the terminal device in the method 400 illustrated in FIG. 13, which will not be described again herein for the sake of brevity.

FIG. 17 is a schematic structural diagram of a communication device 800 provided by embodiments of the present disclosure. As illustrated in FIG. 17, the communication device 800 includes a processor 810. The processor 810 can invoke and execute a computer program stored in a memory, so as to implement the method in embodiments of the disclosure.

In some embodiments, as illustrated in FIG. 17, the communication device 800 may further include a memory 820. The processor 810 can invoke and execute a computer program stored in the memory 820, so as to implement the method in embodiments of the disclosure.

The memory 820 may be a separate device independent of the processor 810 or may be integrated into the processor 810.

In some embodiments, as illustrated in FIG. 17, the communication device 800 may further include a transceiver 830. The processor 810 can control the transceiver 830 to communicate with another device, and specifically, to send information or data to another device or receive information or data sent by another device.

The transceiver 830 may include a transmitter and a receiver. The transceiver 830 may further include an antenna, where one or more antennas may be provided.

In some embodiments, the communication device 800 may specifically be the network device in embodiments of the disclosure, and the communication device 800 may implement corresponding operations implemented by the first network device in various methods in embodiments of the disclosure, which will not be described again herein for the sake of brevity.

In some embodiments, the communication device 800 may specifically be the control device in embodiments of the disclosure, and the communication device 800 may implement corresponding operations implemented by the control device in various methods in embodiments of the disclosure, which will not be described again herein for the sake of brevity.

In some embodiments, the communication device 800 may specifically be the terminal device in embodiments of the disclosure, and the communication device 800 may implement corresponding operations implemented by the terminal device in various methods in embodiments of the disclosure, which will not be described again herein for the sake of brevity.

FIG. 18 is a schematic structural diagram of an apparatus of embodiments of the present disclosure. As illustrated in FIG. 18, an apparatus 900 includes a processor 910. The processor 910 can invoke and execute a computer program stored in a memory, so as to implement the method in embodiments of the disclosure.

In some embodiments, as illustrated in FIG. 18, the apparatus 900 may further include a memory 920. The processor 910 can invoke and execute a computer program stored in the memory 920, so as to implement the method in embodiments of the disclosure.

The memory 920 may be a separate device independent of the processor 910, or may be integrated into the processor 910.

In some embodiments, the apparatus 900 may further include an input interface 930. The processor 910 can control the input interface 930 to communicate with another device or chip, and specifically, to obtain information or data sent by another devices or chip.

In some embodiments, the apparatus 900 may further include an output interface 940. The processor 910 can control the output interface 940 to communicate with another device or chip, and specifically, to output information or data to another devices or chip.

In some embodiments, the apparatus may be applied to the network device in embodiments of the disclosure, and the apparatus may implement corresponding operations implemented by the first network device in various methods in embodiments of the disclosure, which will not be described again herein for the sake of brevity.

In some embodiments, the apparatus may be applied to the control device in embodiments of the disclosure, and the apparatus may implement corresponding operations implemented by the control device in various methods in embodiments of the disclosure, which will not be described again herein for the sake of brevity.

In some embodiments, the apparatus may be applied to the terminal device in embodiments of the disclosure, and the apparatus may implement corresponding operations implemented by the terminal device in various methods in embodiments of the disclosure, which will not be described again herein for the sake of brevity.

In some embodiments, the apparatus in embodiments of the disclosure may also be a chip, e.g., an SOC.

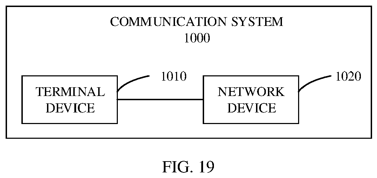

FIG. 19 is a schematic block diagram of a communication system 1000. As illustrated in FIG. 19, the communication system 1000 includes a terminal device 1010 and a network device 1020.

The terminal device 1010 may be configured to implement corresponding functions implemented by the terminal device in the foregoing method, and the network device 1020 may be configured to implement corresponding functions implemented by the network device in the foregoing method, which will not be described in detail again herein for the sake of brevity.

In some embodiments, the communication system 1000 further includes a control device. The control device may connect to at least one network device (including the network device 1020) and may be configured to implement corresponding functions implemented by the control device in the foregoing method.

It should be understood that, the processor in embodiments of the disclosure may be an integrated circuit chip with signal processing capabilities. During implementation, each operation of the foregoing method embodiments may be completed by an integrated logic circuit of hardware in the processor or an instruction in the form of software. The processor may be a general-purpose processor, a digital signal processor (DSP), an application-specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor may be a microprocessor, or the processor may be any conventional processor or the like. The steps of the method disclosed in embodiments of the disclosure may be directly implemented by a hardware decoding processor, or may be performed by hardware and software modules in the decoding processor. The software module can be located in a storage medium such as a random access memory (RAM), a flash memory, a read-only memory (ROM), a programmable ROM (PROM), or an electrically erasable programmable memory, a register, and the like. The storage medium is located in the memory. The processor reads the information in the memory, and completes the steps of the method described above with the hardware thereof.

It can be understood that, the memory in embodiments of the disclosure may be a volatile memory or a non-volatile memory, or may include both the volatile memory and the non-volatile memory. The non-volatile memory may be a ROM, a PROM, an erasable PROM (EPROM), an electric EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memory of the systems and methods described in the disclosure is intended to include, but is not limited to, these and any other suitable types of memory.

It should be understood that, the memory above is intended for illustration rather than limitation. For example, the memory in embodiments of the disclosure may also be an SRAM, a DRAM, an SDRAM, a DDR SDRAM, an ESDRAM, a SLDRAM, a DR RAM, etc. In other words, the memory in embodiments of the disclosure is intended to include, but is not limited to, these and any other suitable types of memory.

Embodiments of the disclosure further provide a computer-readable storage medium. The computer-readable storage medium is configured to store computer programs.

In some embodiments, the computer-readable storage medium may be applied to the network device in embodiments of the disclosure, and the computer programs are operable with a computer to execute corresponding operations implemented by a first network device in various methods in embodiments of the disclosure, which will not be described again herein for the sake of brevity.

In some embodiments, the computer-readable storage medium may be applied to the control device in embodiments of the disclosure, and the computer programs are operable with a computer to execute corresponding operations implemented by the control device in various methods in embodiments of the disclosure, which will not be described again herein for the sake of brevity.

In some embodiments, the computer-readable storage medium may be applied to the terminal device in embodiments of the disclosure, and the computer programs are operable with a computer to execute corresponding operations implemented by the terminal device in various methods in embodiments of the disclosure, which will not be described again herein for the sake of brevity.

Embodiments of the disclosure further provide a computer program product. The computer program product includes computer program instructions.

In some embodiments, the computer program product may be applied to the network device in embodiments of the disclosure, and the computer program instructions are operable with a computer to execute corresponding operations implemented by the first network device in various methods in embodiments of the disclosure, which will not be described again herein for the sake of brevity.

In some embodiments, the computer program product may be applied to the control device in embodiments of the disclosure, and the computer program instructions are operable with a computer to execute corresponding operations implemented by the control device in various methods in embodiments of the disclosure, which will not be described again herein for the sake of brevity.

In some embodiments, the computer program product may be applied to the terminal device in embodiments of the disclosure, and the computer program instructions are operable with a computer to execute corresponding operations implemented by the terminal device in various methods in embodiments of the disclosure, which will not be described again herein for the sake of brevity.

Embodiments of the disclosure further provide a computer program.

In some embodiments, the computer program may be applied to the network device in embodiments of the disclosure. The computer program, when executed by a computer, is operable to implement corresponding operations implemented by the first network device in various methods in embodiments of the disclosure, which will not be described again herein for the sake of brevity.

In some embodiments, the computer program may be applied to the control device in embodiments of the disclosure. The computer program, when executed by a computer, is operable to implement corresponding operations implemented by the control device in various methods in embodiments of the disclosure, which will not be described again herein for the sake of brevity.

In some embodiments, the computer program may be applied to the terminal device in embodiments of the disclosure. The computer program, when executed by a computer, is operable to implement corresponding operations implemented by the terminal device in various methods in embodiments of the disclosure, which will not be described again herein for the sake of brevity.

Those of ordinary skill in the art will appreciate that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the prior art, or part of the technical solution of the disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the disclosure. The above storage medium may include various kinds of media that can store program codes, such as a universal serial bus (USB) flash disk, a mobile hard drive, a ROM, a RAM, a magnetic disk, or an optical disk.

The foregoing illustrations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

**Claims**

1.  A method for wireless communication, comprising:

    receiving, by a first network device, a first signal sent by a terminal device through backscattering; and
    determining, by the first network device, location information of the terminal device according to a reception power of the first signal.

2.  The method of claim 1, wherein the first signal is a signal obtained after a second signal is backscattered by the terminal device, and

    the second signal is sent by the first network device; or
    the second signal is sent by another network device.

3.  The method of claim 2, wherein when the second signal is sent by the first network device, determining, by the first network device, the location information of the terminal device according to the reception power of the first signal comprises:
    determining, by the first network device, the location information of the terminal device according to the reception power of the first signal and a transmission power of the second signal.

4.  The method of claim 3, wherein determining, by the first network device, the location information of the terminal device according to the reception power of the first signal and the transmission power of the second signal comprises:

    determining, by the first network device, a distance between the first network device and the terminal device according to the reception power of the first signal and the transmission power of the second signal; and
    determining, by the first network device, the location information of the terminal device according to the distance between the first network device and the terminal device.

5.  The method of claim 3, wherein determining, by the first network device, the location information of the terminal device according to the reception power of the first signal and the transmission power of the second signal comprises:

    determining, by the first network device, a distance between the first network device and the terminal device according to the reception power of the first signal and the transmission power of the second signal; and determining, by the first network device, the location information of the terminal device according to the distance between the first network device and the terminal device and a distance between at least one additional network device and the terminal device.

6. The method of claim 5, wherein

the at least one additional network device comprises a second network device and a third network device; and determining, by the first network device, the location information of the terminal device according to the distance between the first network device and the terminal device and the distance between the at least one additional network device and the terminal device comprises:
determining, by the first network device, the location information of the terminal device according to the distance between the first network device and the terminal device, a distance between the second network device and the terminal device, and a distance between the third network device and the terminal device.

7. The method of claim 6, wherein

the distance between the second network device and the terminal device is determined by the second network device based on a transmission power of a third signal and a reception power of a fourth signal, wherein the third signal is a signal sent by the second network device to the terminal device, and the fourth signal is a signal received by the second network device after the third signal is backscattered by the terminal device.

8. The method of claim 6 or 7, wherein

the distance between the second network device and the terminal device is obtained by the first network device from the second network device or the distance between the second network device and the terminal device is obtained by the first network device from a control device, wherein the control device at least connects to the first network device and the second network device.

9. The method of claim 6, wherein

the distance between the third network device and the terminal device is determined by the third network device based on a transmission power of a fifth signal and a reception power of a sixth signal, wherein the fifth signal is a signal sent by the third network device to the terminal device, and the sixth signal is a signal received by the third network device after the fifth signal is backscattered by the terminal device.

10. The method of claim 6 or 9, wherein

the distance between the third network device and the terminal device is obtained by the first network device from the third network device or the distance between the third network device and the terminal device is obtained by the first network device from a control device, wherein the control device at least connects to the first network device and the third network device.

11. The method of any one of claims 4 to 10, wherein determining, by the first network device, the distance between the first network device and the terminal device according to the reception power of the first signal and the transmission power of the second signal comprises:

determining, by the first network device, a one-way transmission loss between the first network device and the terminal device according to the reception power of the first signal and the transmission power of the second signal; and
determining, by the first network device, the distance between the first network device and the terminal device according to the one-way transmission loss between the first network device and the terminal device.

12. The method of claim 11, wherein determining, by the first network device, the one-way transmission loss between the first network device and the terminal device according to the reception power of the first signal and the transmission power of the second signal comprises:

determining, by the first network device, the one-way transmission loss between the first network device and the terminal device according to an equation:

$$PL_1 = (P_{T1} - P_{R1} - \alpha)/2,$$

wherein $PL_1$ represents the one-way transmission loss between the first network device and the terminal device, $P_{T1}$ represents the transmission power of the second signal, $P_{R1}$ represents the reception power of the first signal, and $\alpha$ represents a backscatter loss.

13. The method of claim 2, wherein when the second signal is sent by a fourth network device, determining, by the first network device, the location information of the terminal device according to the reception power of the first signal comprises:
    determining, by the first network device, the location information of the terminal device according to the reception power of the first signal, a transmission power of the second signal, and a location relationship between the first network device and the fourth network device.

14. The method of claim 13, wherein

    the transmission power of the second signal is obtained by the first network device from the fourth network device or the transmission power of the second signal is obtained by the first network device from a control device, wherein
    the control device at least connects to the first network device and the fourth network device.

15. The method of any one of claims 2 to 14, wherein

    the second signal is used to supply power for the terminal device, or
    the second signal is used to trigger the terminal device to send a signal through backscattering, or
    the second signal is used to trigger a terminal group comprising the terminal device to send a signal through backscattering, or
    the second signal is a positioning signal, or
    the second signal is inquiry information used to inquire about a terminal device in a first area.

16. The method of any one of claims 2 to 15, wherein the second signal carries identification information of the second signal, or a resource occupied by the second signal indicates the identification information of the second signal.

17. The method of claim 16, wherein the resource occupied by the second signal comprises at least one of:
    a frequency domain resource, a time domain resource, or a code domain resource.

18. The method of any one of claims 2 to 17, wherein

    when the second signal is used to trigger the terminal device to send a signal through backscattering, the second signal comprises identification information of the terminal device; or
    when the second signal is used to trigger a terminal group comprising the terminal device to send a signal through backscattering, the second signal comprises identification information of the terminal group.

19. The method of any one of claims 2 to 18, wherein

    when the second signal is used to trigger the terminal device to send a signal through backscattering, the second signal is carried by a power-supply signal or the second signal is carried by a signal or a channel other than the power-supply signal; or
    when the second signal is used to trigger a terminal group comprising the terminal device to send a signal through backscattering, the second signal is carried by the power-supply signal or the second signal is carried by a signal or a channel other than the power-supply signal; or
    when the second signal is a positioning signal, the second signal is carried by the power-supply signal or the second signal is carried by a signal or a channel other than the power-supply signal; or
    when the second signal is inquiry information used to inquire about a terminal device in a first area, the second signal is carried by the power-supply signal or the second signal is carried by a signal or a channel other than the power-supply signal.

20. The method of any one of claims 2 to 19, wherein the first signal comprises at least one of: identification information of the terminal device, identification information of the second signal, or a backscatter loss of the terminal device.

21. A method for wireless communication, comprising:

receiving, by a control device, first information sent by a first network device, wherein

the first information comprises a reception power of a first signal; and
the first signal is a signal sent by a terminal device through backscattering and received by the first network device; and

determining, by the control device, location information of the terminal device according to the reception power of the first signal.

22. The method of claim 21, wherein the first signal is a signal obtained after a second signal is backscattered by the terminal device; and

the second signal is sent by the first network device; or
the second signal is sent by another network device.

23. The method of claim 22, wherein when the second signal is sent by the first network device, the first information further comprises a transmission power of the second signal; and
determining, by the control device, the location information of the terminal device according to the reception power of the first signal comprises:
determining, by the control device, the location information of the terminal device according to the reception information of the first signal and the transmission power of the second signal.

24. The method of claim 23, wherein determining, by the control device, the location information of the terminal device according to the reception information of the first signal and the transmission power of the second signal comprises:

determining, by the control device, a distance between the first network device and the terminal device according to the reception power of the first signal and the transmission power of the second signal; and
determining, by the control device, the location information of the terminal device according to the distance between the first network device and the terminal device.

25. The method of claim 23, wherein determining, by the control device, the location information of the terminal device according to the reception information of the first signal and the transmission power of the second signal comprises:

determining, by the control device, a distance between the first network device and the terminal device according to the reception power of the first signal and the transmission power of the second signal; and
determining, by the control device, the location information of the terminal device according to the distance between the first network device and the terminal device and a distance between at least one additional network device and the terminal device.

26. The method of claim 25, wherein

the at least one additional network device comprises a second network device and a third network device; and
determining, by the control device, the location information of the terminal device according to the distance between the first network device and the terminal device and the distance between the at least one additional network device and the terminal device comprises:
determining, by the control device, the location information of the terminal device according to the distance between the first network device and the terminal device, a distance between the second network device and the terminal device, and a distance between the third network device and the terminal device.

27. The method of claim 26, wherein

the distance between the second network device and the terminal device is determined by the second network device based on a transmission power of a third signal and a reception power of a fourth signal; or
the distance between the second network device and the terminal device is determined by the control device based on the transmission power of the third signal and the reception power of the fourth signal, wherein the third signal is a signal sent by the second network device to the terminal device, and the fourth signal is a signal received by the second network device after the third signal is backscattered by the terminal device.

28. The method of claim 27, wherein

when the distance between the second network device and the terminal device is determined by the second network device based on the transmission power of the third signal and the reception power of the fourth signal, the distance between the second network device and the terminal device is obtained by the control device from the second network device; and
when the distance between the second network device and the terminal device is determined by the control device based on the transmission power of the third signal and the reception power of the fourth signal, the transmission power of the third signal and the reception power of the fourth signal are obtained by the control device from the second network device, wherein
the control device at least connects to the first network device and the second network device.

29. The method of claim 26, wherein

the distance between the third network device and the terminal device is determined by the third network device based on a transmission power of a fifth signal and a reception power of a sixth signal; or
the distance between the third network device and the terminal device is determined by the control device based on the transmission power of the fifth signal and the reception power of the sixth signal, wherein
the fifth signal is a signal sent by the third network device to the terminal device, and the sixth signal is a signal received by the third network device after the fifth signal is backscattered by the terminal device.

30. The method of claim 29, wherein

when the distance between the third network device and the terminal device is obtained by the third network device based on the transmission power of the fifth signal and the reception power of the sixth signal, the distance between the third network device and the terminal device is obtained by the control device from the third network device; and
when the distance between the third network device and the terminal device is obtained by the control device based on the transmission power of the fifth signal and the reception power of the sixth signal, the transmission power of the fifth signal and the reception power of the sixth signal are obtained by the control device from the third network device, wherein
the control device at least connects to the first network device and the third network device.

31. The method of any one of claims 24 to 30, wherein determining, by the control device, the distance between the first network device and the terminal device according to the reception power of the first signal and the transmission power of the second signal comprises:

determining, by the control device, a one-way transmission loss between the first network device and the terminal device according to the reception power of the first signal and the transmission power of the second signal; and
determining, by the control device, the distance between the first network device and the terminal device according to the one-way transmission loss between the first network device and the terminal device.

32. The method of claim 31, wherein determining, by the control device, the one-way transmission loss between the first network device and the terminal device according to the reception power of the first signal and the transmission power of the second signal comprises:

determining, by the control device, the one-way transmission loss between the first network device and the terminal device according to an equation:

$$PL_1 = (P_{T1} - P_{R1} - \alpha)/2,$$

wherein $PL_1$ represents the one-way transmission loss between the first network device and the terminal device, $P_{T1}$ represents the transmission power of the second signal, $P_{R1}$ represents the reception power of the first signal, and $\alpha$ represents a backscatter loss.

33. The method of claim 22, wherein when the second signal is sent by a fourth network device, determining, by the control device, the location information of the terminal device according to the reception power of the first signal comprises: determining, by the control device, the location information of the terminal device according to the reception power of the first signal, a transmission power of the second signal, and a location relationship between the first network device and the fourth network device.

34. The method of claim 33, wherein

the transmission power of the second signal is obtained by the control device from the fourth network device, wherein
the control device at least connects to the first network device and the fourth network device.

35. The method of any one of claims 22 to 34, wherein

the second signal is used to supply power for the terminal device, or
the second signal is used to trigger the terminal device to send a signal through backscattering, or
the second signal is used to trigger a terminal group comprising the terminal device to send a signal through backscattering, or
the second signal is a positioning signal, or
the second signal is inquiry information used to inquire about a terminal device in a first area.

36. The method of any one of claims 22 to 35, wherein the second signal carries identification information of the second signal, or a resource occupied by the second signal indicates the identification information of the second signal.

37. The method of claim 36, wherein the resource occupied by the second signal comprises at least one of: a frequency domain resource, a time domain resource, or a code domain resource.

38. The method of any one of claims 22 to 37, wherein

when the second signal is used to trigger the terminal device to send a signal through backscattering, the second signal comprises identification information of the terminal device; or
when the second signal is used to trigger a terminal group comprising the terminal device to send a signal through backscattering, the second signal comprises identification information of the terminal group.

39. The method of any one of claims 22 to 38, wherein

when the second signal is used to trigger the terminal device to send a signal through backscattering, the second signal is carried by a power-supply signal or the second signal is carried by a signal or a channel other than the power-supply signal; or
when the second signal is used to trigger a terminal group comprising the terminal device to send a signal through backscattering, the second signal is carried by the power-supply signal or the second signal is carried by a signal or a channel other than the power-supply signal; or
when the second signal is a positioning signal, the second signal is carried by the power-supply signal or the second signal is carried by a signal or a channel other than the power-supply signal; or
when the second signal is inquiry information used to inquire about a terminal device in a first area, the second signal is carried by the power-supply signal or the second signal is carried by a signal or a channel other than the power-supply signal.

40. The method of any one of claims 22 to 39, wherein the first signal comprises at least one of: identification information of the terminal device, identification information of the second signal, or a backscatter loss of the terminal device.

41. A method for wireless communication, comprising:

sending, by a terminal device, a first signal to a first network device through backscattering, wherein a reception power of the first signal is used by the first network device to determine location information of the terminal device.

42. The method of claim 41, wherein the first signal is a signal obtained after a second signal is backscattered by the terminal device, and

the second signal is sent by the first network device; or
the second signal is sent by another network device.

43. The method of claim 42, wherein when the second signal is sent by the first network device, the reception power of the first signal being used by the first network device to determine the location information of the terminal device comprises:

the reception power of the first signal and a transmission power of the second signal being used by the first network device to determine a distance between the first network device and the terminal device; and
the distance between the first network device and the terminal device being used by the first network device to determine the location information of the terminal device.

44. The method of claim 42, wherein when the second signal is sent by the first network device, the reception power of the first signal being used by the first network device to determine the location information of the terminal device comprises:

the reception power of the first signal and a transmission power of the second signal being used by the first network device to determine a distance between the first network device and the terminal device; and
the distance between the first network device and the terminal device being used by the first network device to determine the location information of the terminal device in combination with a distance between a second network device and the terminal device and a distance between a third network device and the terminal device.

45. The method of claim 44, wherein

the distance between the second network device and the terminal device is determined by the second network device based on a transmission power of a third signal and a reception power of a fourth signal, wherein
the third signal is a signal sent by the second network device to the terminal device, and the fourth signal is a signal received by the second network device after the third signal is backscattered by the terminal device.

46. The method of claim 44 or 45, wherein

the distance between the second network device and the terminal device is obtained by the first network device from the second network device or the distance between the second network device and the terminal device is obtained by the first network device from a control device, wherein
the control device at least connects to the first network device and the second network device.

47. The method of claim 44, wherein

the distance between the third network device and the terminal device is determined by the third network device based on a transmission power of a fifth signal and a reception power of a sixth signal, wherein
the fifth signal is a signal sent by the third network device to the terminal device, and the sixth signal is a signal received by the third network device after the fifth signal is backscattered by the terminal device.

48. The method of claim 44 or 47, wherein

the distance between the third network device and the terminal device is obtained by the first network device from the third network device or the distance between the third network device and the terminal device is obtained by the first network device from a control device, wherein
the control device at least connects to the first network device and the third network device.

49. The method of any one of claims 43 to 48, wherein the reception power of the first signal and the transmission power of the second signal being used by the first network device to determine the distance between the first network device and the terminal device comprises:

the reception power of the first signal and the transmission power of the second signal being used by the first network device to determine a one-way transmission loss between the first network device and the terminal device; and
the one-way transmission loss between the first network device and the terminal device being used by the first network device to determine the distance between the first network device and the terminal device.

**50.** The method of claim 49, wherein

the reception power of the first signal and the transmission power of the second signal are used by the first network device to determine the one-way transmission loss between the first network device and the terminal device according to an equation:

$$PL_1 = (P_{T1} - P_{R1} - \alpha)/2,$$

wherein $PL_1$ represents the one-way transmission loss between the first network device and the terminal device, $P_{T1}$ represents the transmission power of the second signal, $P_{R1}$ represents the reception power of the first signal, and $\alpha$ represents a backscatter loss.

**51.** The method of claim 42, wherein when the second signal is sent by a fourth network device, the reception power of the first signal being used by the first network device to determine the location information of the terminal device comprises:
the reception power of the first signal and a transmission power of the second signal being used by the first network device to determine the location information of the terminal device in combination with a location relationship between the first network device and the fourth network device.

**52.** The method of claim 51, wherein

the transmission power of the second signal is obtained by the first network device from the fourth network device or the transmission power of the second signal is obtained by the first network device from a control device, wherein
the control device at least connects to the first network device and the fourth network device.

**53.** The method of any one of claims 42 to 52, wherein

the second signal is used to supply power for the terminal device, or
the second signal is used to trigger the terminal device to send a signal through backscattering, or
the second signal is used to trigger a terminal group comprising the terminal device to send a signal through backscattering, or
the second signal is a positioning signal, or
the second signal is inquiry information used to inquire about a terminal device in a first area.

**54.** The method of any one of claims 42 to 53, wherein the second signal carries identification information of the second signal, or a resource occupied by the second signal indicates the identification information of the second signal.

**55.** The method of claim 54, wherein the resource occupied by the second signal comprises at least one of:
a frequency domain resource, a time domain resource, or a code domain resource.

**56.** The method of any one of claims 42 to 55, wherein

when the second signal is used to trigger the terminal device to send a signal through backscattering, the second signal comprises identification information of the terminal device; or
when the second signal is used to trigger a terminal group comprising the terminal device to send a signal through backscattering, the second signal comprises identification information of the terminal group.

**57.** The method of any one of claims 42 to 56, wherein

when the second signal is used to trigger the terminal device to send a signal through backscattering, the second signal is carried by a power-supply signal or the second signal is carried by a signal or a channel other than the power-supply signal; or

when the second signal is used to trigger a terminal group comprising the terminal device to send a signal through backscattering, the second signal is carried by the power-supply signal or the second signal is carried by a signal or a channel other than the power-supply signal; or

when the second signal is a positioning signal, the second signal is carried by the power-supply signal or the second signal is carried by a signal or a channel other than the power-supply signal; or

when the second signal is inquiry information used to inquire about a terminal device in a first area, the second signal is carried by the power-supply signal or the second signal is carried by a signal or a channel other than the power-supply signal.

**58.** The method of any one of claims 42 to 57, wherein the first signal comprises at least one of: identification information of the terminal device, identification information of the second signal, or a backscatter loss of the terminal device.

**59.** A network device, wherein the network device is a first network device, and the network device comprises:

a communicating unit configured to receive a first signal sent by a terminal device through backscattering; and a processing unit configured to determine location information of the terminal device according to a reception power of the first signal.

**60.** A control device, comprising

a communicating unit configured to receive first information sent by a first network device, wherein

the first information comprises a reception power of a first signal; and the first signal is a signal sent by a terminal device through backscattering and received by the first network device; and

a processing unit configured to determine location information of the terminal device according to the reception power of the first signal.

**61.** A terminal device, comprising

a communicating unit configured to send a first signal to a first network device through backscattering, wherein a reception power of the first signal is used by the first network device to determine location information of the terminal device.

**62.** A network device, comprising a processor and a memory, wherein the memory is configured to store a computer program, and the processor is configured to invoke and execute the computer program stored in the memory to perform the method of any one of claims 1 to 20.

**63.** A control device, comprising a processor and a memory, wherein the memory is configured to store a computer program, and the processor is configured to invoke and execute the computer program stored in the memory to perform the method of any one of claims 21 to 40.

**64.** A terminal device, comprising a processor and a memory, wherein the memory is configured to store a computer program, and the processor is configured to invoke and execute the computer program stored in the memory to perform the method of any one of claims 41 to 58.

**65.** A chip, comprising a processor configured to invoke and execute a computer program from a memory to enable a device equipped with the chip to perform the method of any one of claims 1 to 20, the method of any one of claims 21 to 40, or the method of any one of claims 41 to 58.

**66.** A computer-readable storage medium, configured to store a computer program, wherein the computer program enables a computer to perform the method of any one of claims 1 to 20, the method of any one of claims 21 to 40, or the method of any one of claims 41 to 58.

67. A computer program product, comprising computer program instructions that are operable with a computer to perform the method of any one of claims 1 to 20, the method of any one of claims 21 to 40, or the method of any one of claims 41 to 58.

68. A computer program operable with a computer to perform the method of any one of claims 1 to 20, the method of any one of claims 21 to 40, or the method of any one of claims 41 to 58.

**100**

FIG. 1

FIG. 2

FIG. 3

NETWORK
DEVICE

CARRIER SIGNAL

ZERO-POWER
TERMINAL

TX

AMP

RX

LNA

LOGIC
PROCESSING
MODULE

POWER
HARVESTING
MODULE

BACKSCATTERED
SIGNAL

FIG. 4

$R_2$

$R_3$

BINARY
CODING

$L_2$

$L_1$

$C_1$

$R_L$

S

$C_2$

FIG. 5

**200**

FIRST NETWORK DEVICE RECEIVES FIRST SIGNAL
SENT BY TERMINAL DEVICE THROUGH
BACKSCATTERING

S210

FIRST NETWORK DEVICE DETERMINES LOCATION
INFORMATION OF TERMINAL DEVICE ACCORDING
TO RECEPTION POWER OF FIRST SIGNAL

S220

FIG. 6

FIG. 7

FIG. 8

FIG. 9

FIG. 10

NETWORK
NODE 3

BACKSCATTER

SUPPLY POWER/TRIGGER

NETWORK
NODE 2

BACKSCATTER

TERMINAL
DEVICE

BACKSCATTER

NETWORK NODE 1

FIG. 11

**300**

CONTROL DEVICE RECEIVES FIRST INFORMATION SENT
BY FIRST NETWORK DEVICE, WHERE FIRST INFORMATION
INCLUDES RECEPTION POWER OF FIRST SIGNAL, AND
FIRST SIGNAL IS SIGNAL SENT BY TERMINAL DEVICE
THROUGH BACKSCATTERING AND RECEIVED BY FIRST
NETWORK DEVICE

S310

CONTROL DEVICE DETERMINES LOCATION
INFORMATION OF TERMINAL DEVICE ACCORDING TO
RECEPTION POWER OF FIRST SIGNAL

S320

FIG. 12

400

TERMINAL DEVICE SENDS FIRST SIGNAL TO FIRST
NETWORK DEVICE THROUGH BACKSCATTERING, WHERE
RECEPTION POWER OF FIRST SIGNAL IS USED BY FIRST
NETWORK DEVICE TO DETERMINE LOCATION
INFORMATION OF TERMINAL DEVICE

S410

FIG. 13

NETWORK DEVICE 500

COMMUNICATING UNIT
510

PROCESSING UNIT
520

FIG. 14

CONTROL DEVICE 600

COMMUNICATING UNIT
610

PROCESSING UNIT
620

FIG. 15

TERMINAL DEVICE 700

COMMUNICATING UNIT
710

FIG. 16

COMMUNICATION DEVICE
800

MEMORY
820

PROCESSOR
810

TRANSCEIVER
830

FIG. 17

APPARATUS 900

INPUT
INTERFACE
930

PROCESSOR
910

MEMORY
920

OUTPUT
INTERFACE
940

FIG. 18

COMMUNICATION SYSTEM
1000

TERMINAL
DEVICE
1010

NETWORK
DEVICE
1020

FIG. 19

## INTERNATIONAL SEARCH REPORT

| International application No. |
|---|
| **PCT/CN2021/126070** |

**A. CLASSIFICATION OF SUBJECT MATTER**

G01S 13/75(2006.01)i; G01S 13/74(2006.01)i

According to International Patent Classification (IPC) or to both national classification and IPC

**B. FIELDS SEARCHED**

Minimum documentation searched (classification system followed by classification symbols)

G01S, H04B, G06K

Documentation searched other than minimum documentation to the extent that such documents are included in the fields searched

Electronic data base consulted during the international search (name of data base and, where practicable, search terms used)

CNTXT, CNKI, ENTXTC, VEN: 反向, 背向, 后向, 散射, 定位, 位置, 功率, 强度, RSS, 距离, backscatter+, locat+, position
+, power, strength, RSS, distance

**C. DOCUMENTS CONSIDERED TO BE RELEVANT**

| Category* | Citation of document, with indication, where appropriate, of the relevant passages | Relevant to claim No. |
|---|---|---|
| X | CN 112986905 A (UNIVERSITY OF ELECTRONIC SCIENCE AND TECHNOLOGY OF CHINA) 18 June 2021 (2021-06-18)<br>    description, paragraphs [0004]-[0091], and figures 1-2 | 1-68 |
| A | CN 112485759 A (CHONGQING INNOVATION CENTER, BEIJING INSTITUTE OF TECHNOLOGY) 12 March 2021 (2021-03-12)<br>    entire document | 1-68 |
| A | CN 107544054 A (XIJING UNIVERSITY) 05 January 2018 (2018-01-05)<br>    entire document | 1-68 |
| A | WO 2021164024 A1 (GUANGDONG OPPO MOBILE TELECOMMUNICATIONS CORP., LTD.) 26 August 2021 (2021-08-26)<br>    entire document | 1-68 |
| A | US 2009215408 A1 (SIEMENS AKTIENGESELLSCHAFT) 27 August 2009 (2009-08-27)<br>    entire document | 1-68 |
| A | US 2021231792 A1 (NEC LABORATORIES AMERICA, INC.) 29 July 2021 (2021-07-29)<br>    entire document | 1-68 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 July 2022** | **11 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/126070**

| Patent document cited in search report | | | Publication date (day/month/year) | Patent family member(s) | | | Publication date (day/month/year) |
|---|---|---|---|---|---|---|---|
| CN | 112986905 | A | 18 June 2021 | None | | | |
| CN | 112485759 | A | 12 March 2021 | None | | | |
| CN | 107544054 | A | 05 January 2018 | None | | | |
| WO | 2021164024 | A1 | 26 August 2021 | None | | | |
| US | 2009215408 | A1 | 27 August 2009 | DE | 102005037582 | A1 | 22 February 2007 |
| | | | | EP | 1913417 | A1 | 23 April 2008 |
| | | | | WO | 2007017464 | A1 | 15 February 2007 |
| US | 2021231792 | A1 | 29 July 2021 | WO | 2021154712 | A1 | 05 August 2021 |

Form PCT/ISA/210 (patent family annex) (January 2015)